# EUROPEAN PATENT SPECIFICATION

(11) **EP 3 323 702 B1**
(45) Date of publication and mention of the grant of the patent: **04.09.2019**
(21) Application number: 16824053.9
(22) Date of filing: 08.07.2016
(51) Int. Cl.: B62M 6/55, F16D 41/12, F16D 41/24

(54) **DRIVE UNIT AND ELECTRIC-ASSIST BICYCLE**
ANTRIEBSEINHEIT UND FAHRRAD MIT ELEKTRISCHEM HILFSFANTRIEB
UNITÉ D'ENTRAÎNEMENT ET BICYCLETTE À ASSISTANCE ÉLECTRIQUE

(30) Priority: 14.07.2015 JP 2015140121
(43) Date of publication of application: 23.05.2018
(73) Proprietor: Panasonic Intellectual Property Management Co., Ltd., Osaka-shi, Osaka 540-6207 (JP)
(72) Inventor: KAWAKAMI, Masafumi, Osaka-shi, Osaka 540-6207 (JP)
(74) Representative: Grünecker Patent- und Rechtsanwälte PartG mbB
(86) International application number: PCT/JP2016/003243
(87) International publication number: WO 2017/010068

(56) References cited:
- WO-A1-2015/008314
- WO-A1-2015/186159
- WO-A1-2016/024300
- DE-A1-102013 013 881
- JP-A- H08 230 750
- JP-A- H10 250 673
- JP-A- H11 240 481
- JP-B1- 5 202 769

## Description

### TECHNICAL FIELD

The present invention relates to a drive unit and an electric-assist bicycle including the drive unit.

### BACKGROUND ART

There has been known an electric-assist bicycle which includes a motor operated by power supplied from a storage cell such as a battery. This type of electric-assist bicycle detects human driving force received from pedals as pedal force, and adds auxiliary driving force (assist force) generated by using the motor in accordance with the detected human driving force, to achieve easy traveling even on an upslope or the like.

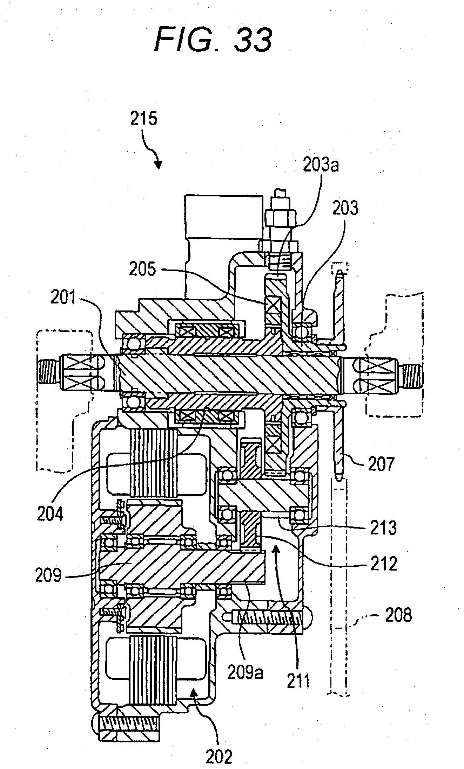

For example, as illustrated in FIG. 33, a drive unit of a conventional electric-assist bicycle includes a human drive system which includes crank shaft 201, and a motor drive system which increases and decreases output of motor 202 in accordance with pedal force applied to crank shaft 201. Cylindrical resultant force shaft 203 is rotatably provided on an axis identical to an axis of crank shaft 201 (for example, see PTL 1). Both the foregoing drive systems are coupled with one end of resultant force shaft 203 so that resultant force generated as a combination of force from the human drive system and auxiliary driving force (assist force) is transmitted from the other end of resultant force shaft 203 toward a rear wheel of the electric-assist bicycle.

Crank shaft 201 penetrates cylindrical human force transmission shaft 204. Human force transmission shaft 204 is rotatably provided adjacent to resultant force shaft 203 and on an axis identical to the axis of crank shaft 201. One end of human force transmission shaft 204 is coupled with resultant force shaft 203 via unidirectional clutch 205, while the other end of human force transmission shaft 204 is coupled with crank shaft 201.

A plurality of teeth 203a are formed in a large-diameter outer circumferential portion at the one end of resultant force shaft 203. Output sprocket 207 is provided at the other end of resultant force shaft 203 to output driving force (resultant force). Chain 208 is wound around output sprocket 207 to transmit driving force (resultant force) to the rear wheel. Output gear 209a is provided on output shaft 209 of motor 202, while gears 212, 213 of speed reducer 211 are provided between output gear 209a and teeth 203a of resultant force shaft 203 in a state of engagement between gears 212, 213.

According to this configuration, human driving force is transmitted by pedaling from crank shaft 201 to resultant force shaft 203 via human force transmission shaft 204 and unidirectional clutch 205. In addition, auxiliary driving force generated from motor 202 is transmitted to resultant force shaft 203 via speed reducer 211. Resultant force shaft 203 is rotated by resultant force generated as a combination of the human driving force and the auxiliary driving force. Accordingly, output sprocket 207 rotates together with resultant force shaft 203, and transmits the resultant force to the rear wheel via chain 208 to rotate the rear wheel.

### Citation List

### Patent Literature

PTL 1: Unexamined Japanese Patent Publication No. 10-250673

The prior art document WO2015/008314 A1 discloses an electric assist bicyle comprising or motor drive unit, and the preamble of claim 1.

### SUMMARY OF THE INVENTION

However, drive unit 215 described above is not equipped with a transmission mechanism. Accordingly, there arises such a problem that an excessive load is applied to motor 202 and a person riding the electric-assist bicycle during traveling by the bicycle on a sharp upslope.

The present invention is directed to a drive unit and an electric-assist bicycle configured to rotate a resultant force transmitter by resultant force as a combination of human driving force and auxiliary driving force and transmit the rotation of the resultant force transmitter to a rear wheel to reduce a load applied to a motor and a person riding the bicycle.

The drive unit according to the present invention is a drive unit included in an electric-assist bicycle capable of traveling with a combination of human driving force received from pedals as pedal force and auxiliary driving force generated by a motor. The drive unit includes: a crank shaft rotated by the human driving force; a resultant force transmitter rotatable by resultant force generated by a combination of the human driving force and the auxiliary driving force; a driving force output wheel body to which rotation of the resultant force transmitter is transmitted; and a transmission mechanism that has a plurality of selectable gear positions with different gear ratios, and transmits driving force to the resultant force transmitter. The crank shaft and a resultant force transmission shaft are coaxially provided. The transmission mechanism includes: a plurality of transmission gears including a low-speed position transmission gear and a high-speed position transmission gear; a high-speed position clutch capable of transmitting driving force of the high-speed position transmission gear to the resultant force transmitter; and a clutch switch body engageable to and disengageable from the high-speed position clutch and shifted in accordance with the selected gear position. Further, the drive unit is characterized by including a force applying mechanism that applies force from the clutch switch body to the high-speed position clutch to switch a state of the high-speed position clutch from a connection state connected to the resultant force transmitter to a disconnection state disconnected from the resultant force transmitter when the clutch switch body contacts the high-speed position clutch. It is preferable that the transmission mechanism of the drive unit includes a low-speed position clutch capable of transmitting driving force of the low-speed position transmission gear to the resultant force transmitter, and that the high-speed position clutch includes an engaging member engageable with and disengageable from the high-speed position transmission gear and the clutch switch body.

According to this configuration, an optimal gear position is selected in accordance with a slope of a traveling road surface or the like during traveling of the electric-assist bicycle to reduce a load imposed on the motor and a person riding the bicycle. Accordingly, traveling suited for the traveling road surface is achievable. Moreover, there is provided the force applying mechanism that applies force from the clutch switch body to the high-speed position clutch to switch the state of the high-speed position clutch from the connection state connected to the resultant force transmitter to the disconnection state disconnected from the resultant force transmitter when the clutch switch body contacts the high-speed position clutch. In this case, force for bringing the high-speed position clutch into the disconnection state is given by the contact between the clutch switch body and the high-speed position clutch at the time of a speed change from the high-speed position to the low-speed position. Accordingly, preferable speed change operation is achievable.

### BRIEF DESCRIPTION OF DRAWINGS

FIG. 1 is a left side view of an entire appearance of an electric-assist bicycle according to an exemplary embodiment of the present invention.
FIG. 2 is a left side view of a drive unit according to the exemplary embodiment of the present invention.
FIG. 3 is a right side view of the drive unit according to the exemplary embodiment of the present invention from which a driving sprocket, a right case and other components have been removed.
FIG. 4 is a planar cross-sectional view of the drive unit in a low-speed position (first speed position) of gear positions according to the exemplary embodiment of the present invention.
FIG. 5 is an enlarged planar cross-sectional view illustrating a main part of the drive unit in the low-speed position (first speed position) of the gear positions according to the exemplary embodiment of the present invention.
FIG. 6 is a conceptual side view of a low-speed position clutch and a high-speed position clutch in the low-speed position (first speed position) of the gear positions of the drive unit according to the exemplary embodiment of the present invention.
FIG. 7 is a planar cross-sectional view of the drive unit in a high-speed position (second speed position) of the gear positions according to the exemplary embodiment of the present invention.
FIG. 8 is an enlarged planar cross-sectional view illustrating the main part of the drive unit in the high-speed position (second speed position) of the gear positions according to the exemplary embodiment of the present invention.
FIG. 9 is a conceptual side view of the low-speed position clutch and the high-speed position clutch in the high-speed position (second speed position) of the gear positions of the drive unit according to the exemplary embodiment of the present invention.
FIG. 10 is a perspective view of a resultant force transmitter of the drive unit according to the exemplary embodiment of the present invention.
FIG. 11 is a perspective view of a high-speed position transmission gear of the drive unit according to the exemplary embodiment of the present invention.
FIG. 12 is a perspective view of the resultant force transmitter, the high-speed position clutch, and a clutch switch body of the drive unit according to the exemplary embodiment of the present invention.
FIG. 13 is a perspective view of an engaging member (ratchet pawl) of the high-speed position clutch of the drive unit according to exemplary embodiment of the present invention.
FIG. 14 is a side view of the engaging member (ratchet pawl) of the high-speed position clutch of the drive unit according to the exemplary embodiment of the present invention.
FIG. 15 is a cross-sectional view of a gear position switch mechanism in the low-speed position (first speed position) of the gear positions of the drive unit according to the exemplary embodiment of the present invention.
FIG. 16 is a cross-sectional view of the gear position switch mechanism in the high-speed position (second speed position) of the gear positions of the drive unit according to the exemplary embodiment of the present invention.
FIG. 17 is a perspective view of the clutch switch body of the drive unit according to the exemplary embodiment of the present invention.
FIG. 18 is a right side view of the clutch switch body of the drive unit according to the exemplary embodiment of the present invention.
FIG. 19 is a cross-sectional view of the clutch switch body of the drive unit according to the exemplary embodiment of the present invention, taken along a line 19-19 in FIG. 18.
FIG. 20 is a cross-sectional view of the clutch switch body of the drive unit according to the exemplary embodiment of the present invention, taken along a line 20-20 in FIG. 18.
FIG. 21 is a side view illustrating a main part of the high-speed position clutch in the high-speed position (second speed position) of the gear positions of the drive unit according to the exemplary embodiment of the present invention.
FIG. 22 is a side view illustrating the main part of the high-speed position clutch during gear position switching of the drive unit from the high-speed position (second speed position) to the low-speed position (first speed position) according to the exemplary embodiment of the present invention.
FIG. 23 is a side view of an ordinary engaging member (ratchet pawl) of the drive unit according to the exemplary embodiment of the present invention.

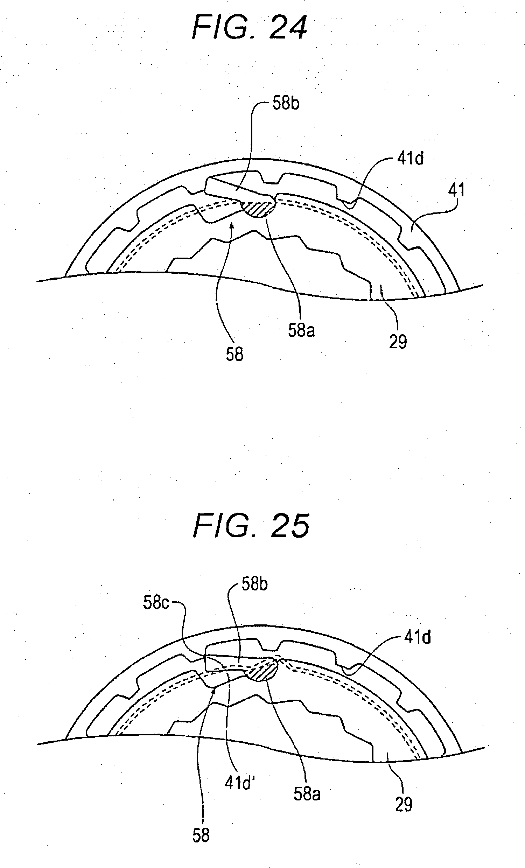

FIG. 24 is a side view illustrating a main part of the ordinary engaging member (ratchet pawl) used for the high-speed position clutch in the high-speed position (second speed position) of the gear positions of the drive unit according to the exemplary embodiment of the present invention.
FIG. 25 is a side view illustrating the main part of the ordinary engaging member (ratchet pawl) used for the high-speed position clutch during gear position switching of the drive unit from the high-speed position (second speed position) to the low-speed position (first speed position) according to the exemplary embodiment of the present invention.
FIG. 26 is a partially cut-away plan view of the resultant force transmitter, the high-speed position clutch, and the clutch switch body of the drive unit in a state of non-contact between the clutch switch body and the engaging member of the high-speed position clutch according to the exemplary embodiment of the present invention.
FIG. 27 is a plan view of the resultant force transmitter, the high-speed position clutch, and the clutch switch body of the drive unit in a state that the engaging member of the high-speed position clutch is in the middle of a shift for fitting to a cam face of the clutch switch body according to the exemplary embodiment of the present invention.
FIG. 28 is a partial right side view of the resultant force transmitter, the high-speed position clutch, and the clutch switch body of the drive unit in a state that the engaging member of the high-speed position clutch has been fitted to the cam face of the clutch switch body according to the exemplary embodiment of the present invention.
FIG. 29 is a plan view of the resultant force transmitter, the high-speed position clutch, and the clutch switch body of the drive unit in a state that the engaging member of the high-speed position clutch has been fitted to the cam face of the clutch switch body and has come into a lying state according to the exemplary embodiment of the present invention.
FIG. 30 is a partial right side view of the resultant force transmitter, the high-speed position clutch, and the clutch switch body of the drive unit in a state that the engaging member of the high-speed position clutch has been fitted to the cam face of the clutch switch body and has come into the lying state according to the exemplary embodiment of the present invention.
FIG. 31 is a plan view of the resultant force transmitter, the high-speed position clutch, and the clutch switch body of the drive unit in a state that the engaging member of the high-speed position clutch has been separated from the cam face of the clutch switch body according to the exemplary embodiment of the present invention.
FIG. 32 is a partial right side view of the resultant force transmitter, the high-speed position clutch, and the clutch switch body of the drive unit in a state that the engaging member of the high-speed position clutch has been separated from the cam face of the clutch switch body according to the exemplary embodiment of the present invention.
FIG. 33 is a planar cross-sectional view of a drive unit of a conventional electric-assist bicycle.

### DESCRIPTION OF EMBODIMENT

An electric-assist bicycle according to an exemplary embodiment of the present invention is hereinafter described with reference to the drawings. In following description, a right-left direction and a front-rear direction are directions as viewed from a person riding on electric-assist bicycle 1 and facing in a traveling direction. It is not intended that a configuration of the present invention be limited to a configuration described below.

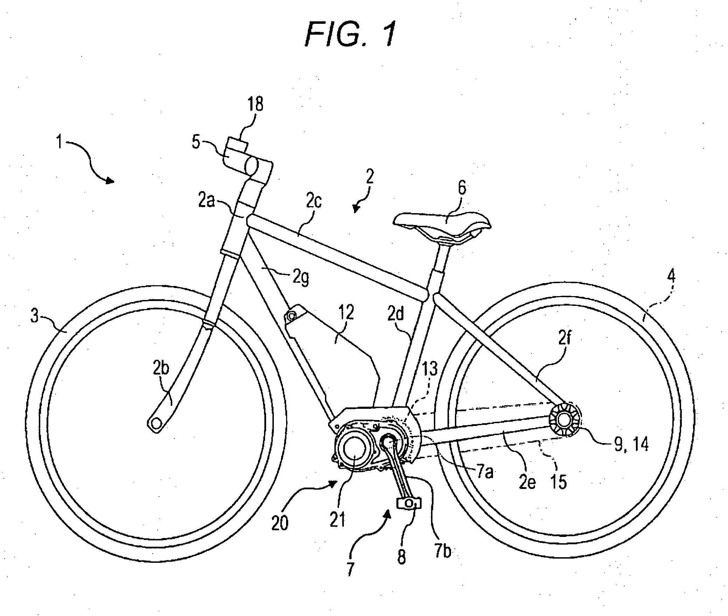

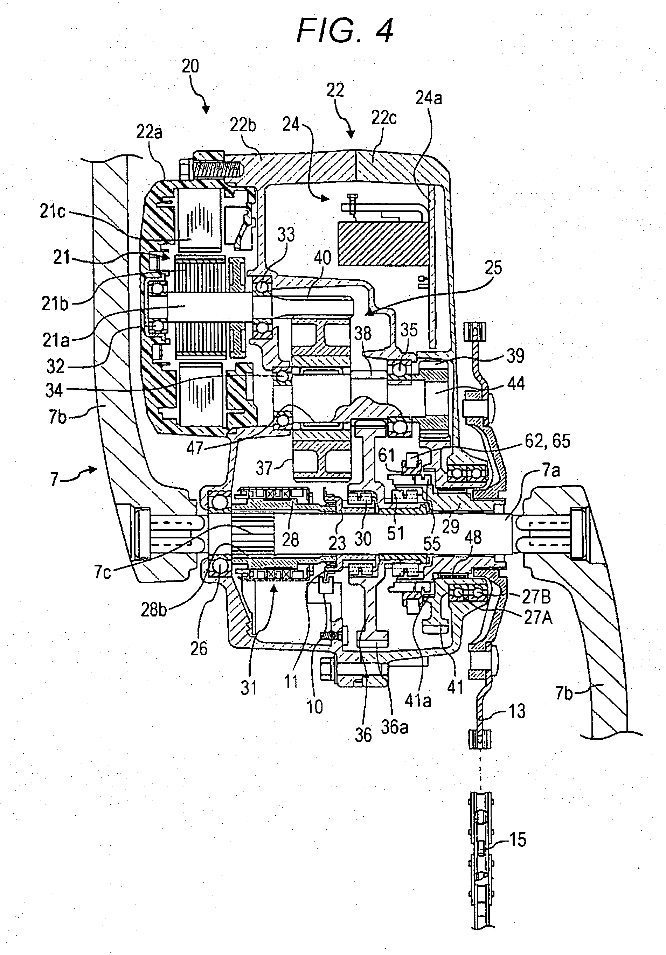

FIG. 1 illustrates the electric-assist bicycle according to the exemplary embodiment of the present invention. As illustrated in FIG. 1, electric-assist bicycle 1 includes metal frame 2 constituted by head tube 2a, front fork 2b, upper tube 2c, lower tube 2g, seat tube 2d, chain stays 2e, seat stays 2f, and others. Electric-assist bicycle 1 further includes: front wheel 3 rotatably attached to a lower end of front fork 2b; rear wheel 4 rotatably attached to a rear end of chain stays 2e; handlebar 5 which changes a direction of front wheel 3; saddle 6 on which a person riding the bicycle sits; and crank 7 and pedals 8 to each of which human driving force generated by pedal force is applied. Electric-assist bicycle 1 further includes: drive unit 20 which includes components such as electric motor 21 (see FIG. 4 and the like) functioning as a driving source for generating auxiliary driving force (assist force), and controller 24 (see FIG. 4) performing various types of electric control including control of motor 21; and battery 12 constituted by a secondary battery for supplying driving power to motor 21. Electric-assist bicycle 1 further includes: gear position remote operation unit 18 attached to handlebar 5 or the like and operated by the person riding the bicycle or the like to set a speed (low-speed position (first speed position) or high-speed position (second speed position)) of transmission mechanism (speed reduction transmission mechanism) 25 described below; and a remote setting unit (not shown) attached to the handlebar or the like and operated by the person riding the bicycle or the like to turn on or off the power source of electric-assist bicycle 1, set a traveling mode, or perform other operations. Electric-assist bicycle 1 further includes: driving sprocket (also referred to as front sprocket, crank sprocket, and front gear) 13 attached coaxially with crank shaft 7a in a manner rotatable with crank shaft 7a as a one-piece body, and constituting a driving force output wheel body for outputting resultant force of human driving force and auxiliary driving force; and rear sprocket (also referred to as rear gear) 14 attached to hub (also referred to as rear hub) 9 of rear wheel 4 and constituting a rear wheel body. Electric-assist bicycle 1 further includes chain 15 constituting an endless driving force transmitter extended between driving sprocket 13 and rear sprocket 14 and endlessly and rotatably wound around driving sprocket 13 and rear sprocket 14, and other components. Electric-assist bicycle 1 is capable of traveling with a combination of human driving force received from pedals 8 as pedal force and auxiliary driving force generated by motor 21. Resultant force as a combination of the human driving force and the auxiliary driving force is transmitted from driving sprocket 13 to rear wheel 4 via chain 15, rear sprocket 14 and other components.

Battery 12 as an example of a storage cell is preferably constituted by a secondary battery. However, the electric storage cell may be a capacitor or the like. Crank 7 includes crank arms 7b respectively provided on right and left sides, and crank shaft 7a connecting right and left crank arms 7b. Pedals 8 are rotatably attached to ends of right and left crank arms 7b.

As illustrated in FIG. 1, drive unit 20 of electric-assist bicycle 1 is disposed at an intermediate position (more specifically, intermediate lower position) between front wheel 3 and rear wheel 4, such as a position near crank shaft 7a. According to this arrangement, drive unit 20 having a relatively large weight is positioned at a center of electric-assist motor 1 in the front-rear direction. In this case, front wheel 3 and rear wheel 4 are easily raised to easily go over a step which may be present on a traveling road, for example. Accordingly, handling easiness of a vehicle body (including frame 2) of electric-assist bicycle 1, and traveling stability are both improvable.

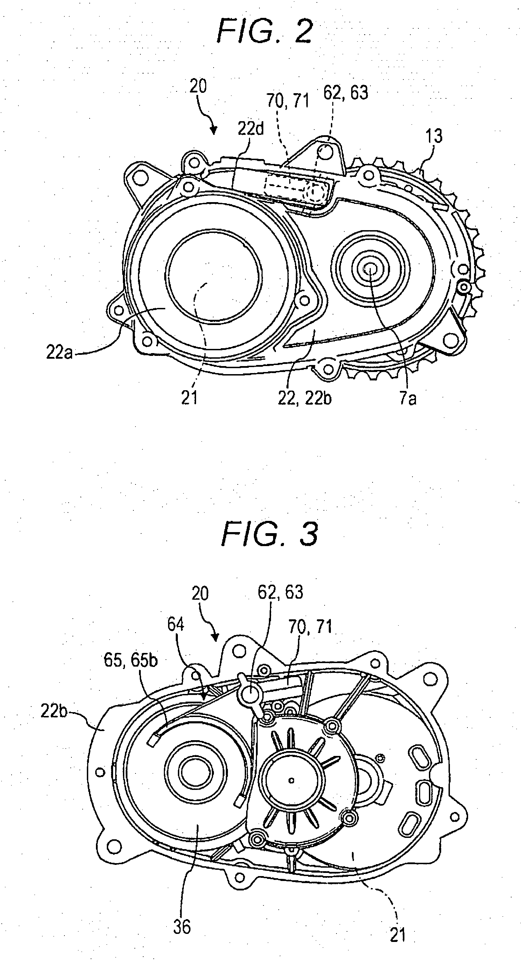

As illustrated in FIGS. 2 through 4 and other figures, drive unit 20 includes unit case 22 constituting an outer casing. Unit case 22 includes motor case 22a, left case 22b, right case 22c, and switch cover 22d. Crank shaft 7a penetrates drive unit 20 (rear part of drive unit 20 in this exemplary embodiment) in the right-left direction. Substantially cylindrical human force transmitter 28 to which human driving force is transmitted from crank shaft 7a, and linkage cylindrical body 23 to which human driving force is transmitted from human force transmitter 28 are provided on an outer circumference of crank shaft 7a. Further provided is resultant force transmitter 29 to which human driving force is transmitted from linkage cylindrical body 23 via unidirectional clutch (auxiliary driving force disconnection unidirectional clutch) 30 and other components, and which transmits to driving sprocket 13 resultant force as a combination of human driving force and auxiliary driving force generated by motor 21.

As illustrated in FIG. 4 and other figures, unit case 22 of drive unit 20 houses speed reduction mechanism 25 which transmits rotation of motor 21 toward resultant force transmitter 29 (intermediate shaft 44 in this exemplary embodiment) while reducing a rotation speed, and transmission mechanism 17 which transmits rotation to resultant force transmitter 29 while changing a rotation speed in accordance with a plurality of gear positions. Unit case 22 of drive unit 20 further houses motor 21, and controller 24 which includes control board 24a containing electronic parts for performing various types of electric controls, and a storage unit for storing various types of information.

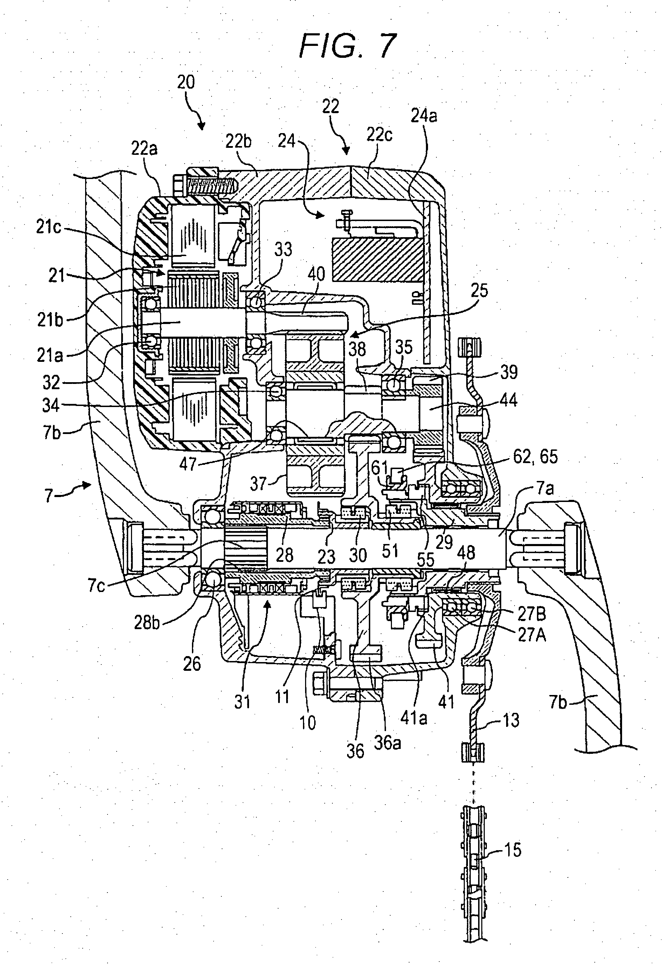

Drive unit 20 is further detailed herein. As illustrated in FIGS. 4, 5, 7, 8, and other figures, crank shaft 7a penetrates the rear part of drive unit 20 in the right-left direction while rotatably supported by bearings 26, 27A, 27B. Cylindrical human force transmitter 28 is fitted to an outer circumference of a left part of crank shaft 7a via serration portion (or spline portion) 7c such that cylindrical human force transmitter 28 and crank shaft 7a rotate as a one-piece body. Serration portion (or spline portion) 28b is similarly provided on an inner circumference of human force transmitter 28 at a position corresponding to serration portion (or spline portion) 7c of crank shaft 7a to engage with serration portion (or spline portion) 7c of crank shaft 7a.

Magneto-striction generator 31b having magnetic anisotropy is provided on an outer circumferential surface of human force transmitter 28. Coil 31a is disposed on an outer circumference of magneto-striction generator 31b with a fixed clearance (space). Magneto-striction generation unit 31b and coil 31a thus provided constitute magneto-striction type torque sensor (human force detector) 31. According to this configuration, human driving force is transmitted from crank shaft 7a to human force transmitter 28, and detected by torque sensor 31. Magneto-striction generator 31b of magneto-striction type torque sensor 31 has a spiral shape which forms angles of +45 degrees and -45 degrees with respect to a shaft center direction of human force transmitter 28, for example. When human driving force is transmitted to human force transmitter 28, magneto-striction generator 31b on the surface of human force transmitter 28 is distorted and produces magnetic permeability increasing portion and magnetic permeability decreasing portion. Inductance difference of coil 31a thus produced is measured to detect a magnitude of torque (human driving force).

Linkage cylindrical body 23 is disposed adjacent to a right side of human force transmitter 28 on an outer circumference of crank shaft 7a, and provided in a rotatable state relative to crank shaft 7a. However, linkage cylindrical body 23 rotates with human force transmitter 28 as a one-piece body by engagement between serration portion (or spline portion) 28a formed at a right end of the outer circumferential surface of human force transmitter 28, and serration portion (or spline portion) 23a formed at a left end of the inner circumference of linkage cylindrical body 23. According to this exemplary embodiment, serration portion (or spline portion) 23a formed at the left end of the inner circumference of linkage cylindrical body 23 engages with an outer face of serration portion (or spline portion) 28a of human force transmitter 28.

According to this exemplary embodiment, rotation detection member 11 is further attached to an outer circumference of a left portion of linkage cylindrical body 23 to detect a rotation state of linkage cylindrical body 23. Rotation detector 10 is also attached and fixed to unit case 22 such that rotation detection member 11 is inserted into rotation detector 10 with small clearances in the right-left direction. For example, rotation detector 10 includes two optical sensors constituted by a pair of light emission unit and light reception unit and arranged in a rotation direction of rotation detection member 11. Rotation detection member 11 includes many teeth (light shielding portions) extending in an outer circumferential direction in a comb shape. The teeth of rotation detection member 11 pass between the light emission unit and the light reception unit of rotation detector 10 to allow electrical detection of a light receiving state and a light shielding state by rotation detector 10. Controller 24 that receives a signal indicating this detection detects a rotation amount and a rotation direction of linkage cylindrical body 23. The rotation amount and the rotation direction of linkage cylindrical body 23 may be detected by a magnetic sensor provided instead of the optical sensor. Linkage cylindrical body 23 rotates with human force transmitter 28 as a one-piece body, while human force transmitter 28 rotates with crank shaft 7a as a one-piece body. Accordingly, the rotation amount and the rotation direction of each of crank shaft 7a and pedals 8 are detectable based on detection of the rotation amount and the rotation direction of linkage cylindrical body 23.

As illustrated in FIGS. 4 through 9 and other figures, transmission mechanism 17 provided on a right side and an outer circumferential side of linkage cylindrical body 23 has a plurality of selectable gear positions with different gear ratios to transmit driving force to resultant force transmitter 29 via unidirectional clutch (auxiliary driving force disconnection unidirectional clutch) 30. Transmission mechanism 17 includes low-speed position transmission gear 36, high-speed position transmission gear 41, high-speed position clutch 55 capable of transmitting driving force from high-speed position transmission gear 41 to resultant force transmitter 29, clutch switch body 61 engageable with and disengageable from high-speed position clutch 55 and shifted in accordance with a selected gear position, low-speed position clutch 51 capable of transmitting driving force from low-speed position transmission gear 36 to resultant force transmitter 29, and others. During forward traveling by working pedals 8, human driving force transmitted to linkage cylindrical body 23 is transmitted to low-speed position transmission gear 36 of transmission mechanism 17.

Low-speed position transmission gear 36 has a diameter larger than a diameter of high-speed position transmission gear 41, and includes tooth portion 36a formed on an outer circumferential portion of a large-diameter region, and small-diameter cylindrical portion 36b formed on an inner circumferential portion and projecting toward the right side. Low-speed position transmission gear 36 is rotatably provided on the outer circumference of crank shaft 7a via rotation cylinder 42. Low-speed position transmission gear 36 and linkage cylindrical body 23 are configured to link with each other via unidirectional clutch (auxiliary driving force disconnection unidirectional clutch) 30. Unidirectional clutch 30 achieves connection and disconnection between low-speed position transmission gear 36 and linkage cylindrical body 23 in the circumferential direction.

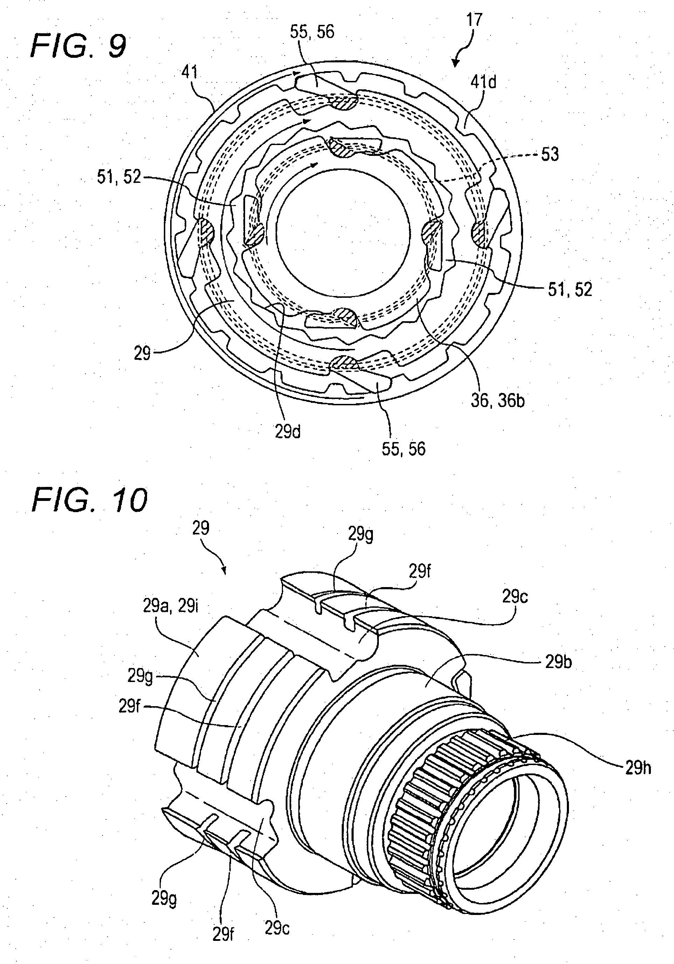

As illustrated in FIG. 10, FIGS. 4 through 9 and other figures, resultant force transmitter 29 is a cylindrical member rotatably fitted to the outer side of crank shaft 7a, and includes middle-diameter cylindrical portion 29a provided on a left side, small-diameter cylindrical portion 29b provided on a right side, and tooth portion 29d provided on an inner circumference of middle-diameter cylindrical portion 29a. Resultant force transmitter 29 further includes: storage recesses 29c formed in middle-diameter cylindrical portion 29a at intervals of a predetermined angle to store engaging members 56 (also called ratchet pawls or cams) of high-speed position clutch 55 described below in a rising state or a lying state; and urging spring storage groove 29f which stores urging spring 57 constituted by a spring of high-speed position clutch 55 described below in a contracted state. Resultant force transmitter 29 further includes: regulation spring storage groove 29g which stores a regulation spring for regulating a shift of engaging members 56 of high-speed position clutch 55 to the left; serration portion (or spline portion) 29h provided on an outer circumferential surface of a right cylindrical portion of a small-diameter region of resultant force transmitter 29 to receive driving sprocket 13; and other components. Resultant force transmitter 29 is coaxially and rotatably provided on the outer circumference of crank shaft 7a. A right end of small-diameter cylindrical portion 29b of resultant force transmitter 29 projects to the outside from unit case 22. Driving sprocket 13 is fitted to an outer side of this projected portion of small-diameter cylindrical portion 29b such that resultant force transmitter 29 and driving sprocket 13 rotate as a one-piece body.

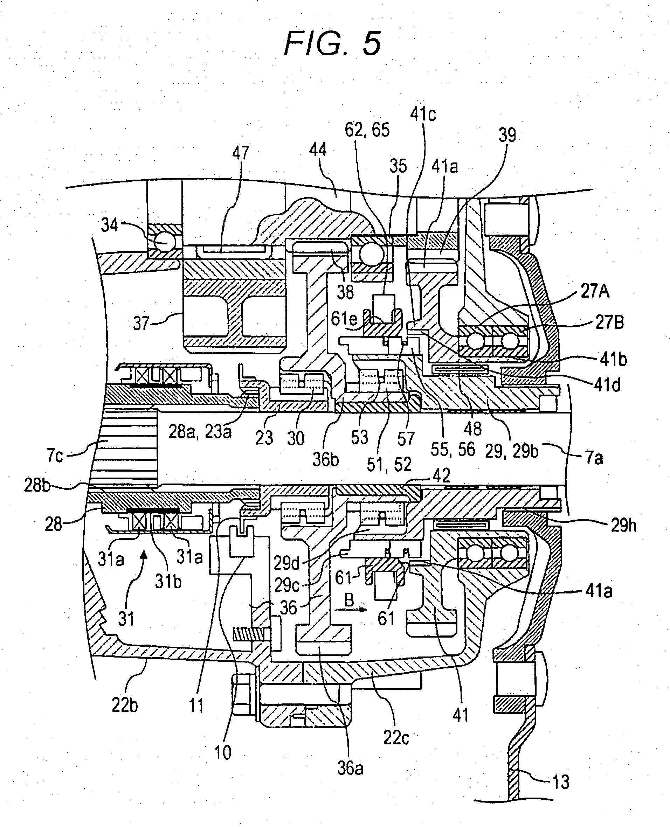

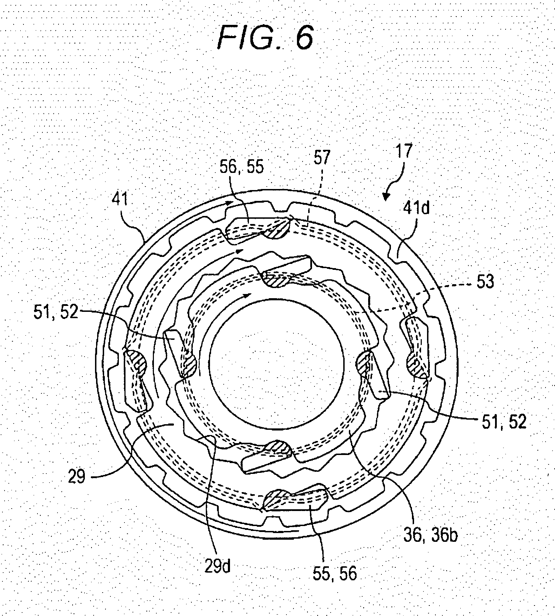

As illustrated in FIGS. 4 through 9 and other figures, cylindrical portion 36b of low-speed position transmission gear 36 is inserted into middle-diameter cylindrical portion 29a of resultant force transmitter 29, while low-speed position clutch (low-speed position unidirectional clutch) 51 is provided on an outer circumference of cylindrical portion 36b of low-speed position transmission gear 36. As illustrated in FIGS. 5, 6, 8, 9, low-speed position clutch 51 includes a plurality of engaging members 52 constituted by ratchet pawls (cams) coming into a rising state or a lying state in a radial direction, and urging spring 53 constituted by an annular spring which urges engaging members 52 toward the radially outside to bring engaging members 52 into the rising state. Engaging members 52 of low-speed position clutch 51 are capable of engaging with and disengaging from tooth portion 29d of resultant force transmitter 29. When the state of engaging members 52 is switched to the rising state, engaging members 52 engage with tooth portion 29d of resultant force transmitter 29 as illustrated in FIG. 6. When the state of engaging members 52 is switched to the lying state, engaging members 52 disengage from tooth portion 29d of resultant force transmitter 29 as illustrated in FIG. 9.

As illustrated in FIGS. 4 through 9, FIG. 11 and other figures, high-speed position transmission gear 41 is rotatably fitted to an outer side of small-diameter cylindrical portion 29b of resultant force transmitter 29 via bearing 48. High-speed position transmission gear 41 includes tooth portion 41a formed on an outer circumferential portion of a large-diameter region, small-diameter cylindrical portion 41b formed on an inner circumferential portion of a small-diameter region and projecting to the right, middle-diameter cylindrical portion 41c formed between tooth portion 41a and small-diameter cylindrical portion 41b and projecting to the left, and tooth portion 41d formed on an inner circumference of middle-diameter cylindrical portion 41c. A diameter of tooth portion 41a of high-speed position transmission gear 41 is smaller than a diameter of tooth portion 36a of low-speed position transmission gear 36.

As illustrated in FIGS. 5, 6, 8, 9, 12 through 14 and other figures, high-speed position clutch 55 constituted by a unidirectional clutch is provided on an outer circumferential side of middle-diameter cylindrical portion 29a of resultant force transmitter 29. High-speed position clutch 55 includes a plurality of engaging members 56 constituted by ratchet pawls (cams) coming into the rising state or the lying state in a radial direction, and urging spring 57 constituted by an annular spring which urges engaging members 56 toward the radially outside to bring engaging members 56 into the rising state. Engaging members 56 of high-speed position clutch 55 are engageable with and disengageable from tooth portion 41d of high-speed position transmission gear 41. When the state of engaging members 56 is switched to the rising state, engaging members 56 engage with tooth portion 41d of high-speed position transmission gear 41 as illustrated in FIG. 9. When the state of engaging members 56 is switched to the lying state, engaging members 56 disengage from tooth portion 41d of high-speed position transmission gear 41 as illustrated in FIG. 6. Engaging members 56 are also engageable with and disengageable from clutch switch body 61 described below.

According to the present exemplary embodiment described above, transmission mechanism 17 including high-speed position clutch 55 and low-speed position clutch 51 is disposed between driving sprocket 13 constituting a driving force output wheel body, and torque sensor 31 (magneto-striction generator 31b of torque sensor 31) and rotation detection member 11 in the shaft center direction of crank shaft 7a. High-speed position clutch 55 is disposed outside low-speed position clutch 51 around the shaft center of crank shaft 7a.

As illustrated in FIGS. 4, 5, 7 and 8 and other figures, a left end of crank shaft 7a is rotatably supported by unit case 22 (more specifically, left case 22b) via bearing 26 on one side, while small-diameter cylindrical portion 41b of high-speed position transmission gear 41 is rotatably supported, together with a right end of crank shaft 7a and resultant force transmitter 29, by unit case 22 (more specifically, right case 22c) via two bearings 27A, 27B on the other side.

Motor 21 includes stator unit 21c, rotor unit 21b rotatably supported by motor bearings 32, 33, and motor rotation shaft 21a rotatable with rotor unit 21b as a one-piece body. Motor rotation shaft 21a of motor 21 projects to the right side. Motor shaft speed reduction gear 40 of speed reduction mechanism 25 is provided on an outer circumference of this projected shaft portion.

Speed reduction mechanism 25 includes: intermediate shaft 44 provided between crank shaft 7a and motor rotation shaft 21a and disposed in parallel with crank shaft 7a and motor rotation shaft 21a; first speed reduction gear 37, second speed reduction gear 38, and third speed reduction gear 39 each provided on intermediate shaft 44; and human driving force disconnection unidirectional clutch 47. Intermediate shaft 44 is rotatably provided inside unit case 22 via a pair of bearings 34, 35. A diameter of first speed reduction gear 37 is larger than each of a diameter of second speed reduction gear 38 and a diameter of third speed reduction gear 39. The diameter of second speed reduction gear 38 is smaller than each of the diameter of first speed reduction gear 37 and the diameter of third speed reduction gear 39. The diameter of third speed reduction gear 39 is larger than the diameter of second speed reduction gear 38 and smaller than the diameter of the first speed reduction gear 37.

First speed reduction gear 37 engages with motor shaft speed reduction gear 40. Second speed reduction gear 38 engages with low-speed position transmission gear 36. Third speed reduction gear 39 engages with high-speed position transmission gear 41. Accordingly, low-speed position transmission gear 36 and high-speed position transmission gear 41 are linked with motor 21 via speed reduction mechanism 25. Unidirectional clutch 47 is provided between an outer circumference of intermediate shaft 44 and an inner circumference of first speed reduction gear 37 to disconnect human driving force. More specifically, unidirectional clutch 47 prevents rotation of rotor unit 21b of motor 21 caused by pedal force of pedals 8, while motor 21 does not operate and does not generate auxiliary driving force. When intermediate shaft 44 and first speed reduction gear 37 are connected via unidirectional clutch 47, first speed reduction gear 37, second speed reduction gear 38, and third speed reduction gear 39 rotate together with intermediate shaft 44 in one direction as a one-piece body.

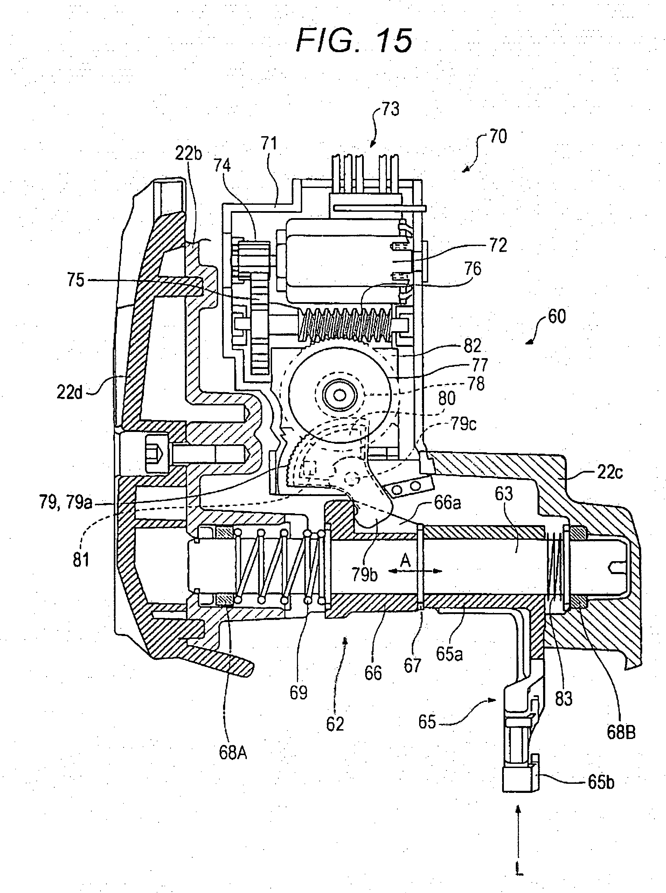

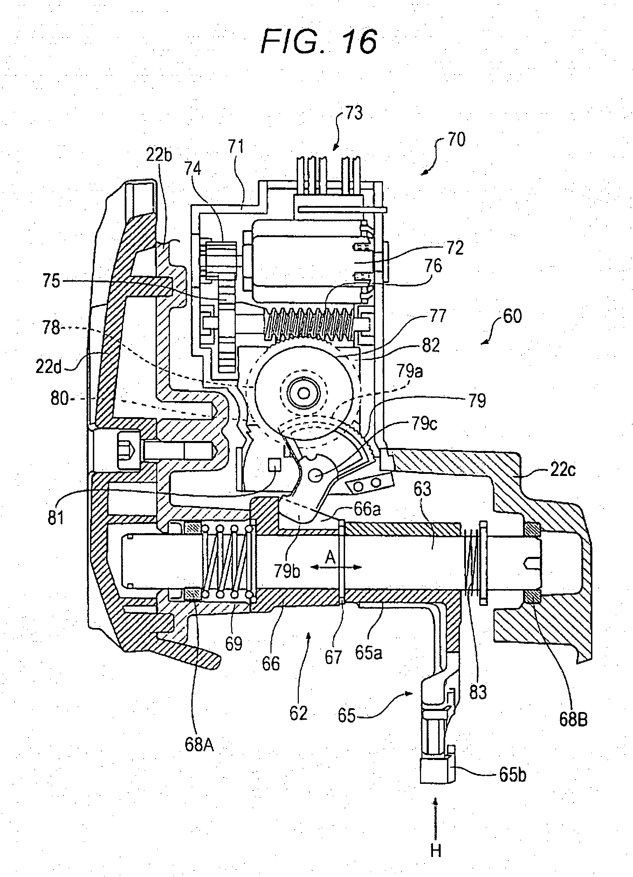

Transmission mechanism 17 has selectable low-speed position (i.e., first speed position as one example of gear position) and high-speed position (i.e., second speed position as one example of gear position) with different gear ratios. When the low-speed position is selected, rotation of low-speed position transmission gear 36 is transmitted to resultant fore transmitter 29. When the high-seed position is selected, rotation of high-speed position transmission gear 41 is transmitted to resultant force transmitter 29. Transmission mechanism 17 further includes gear position switch mechanism 60 to switch a gear position (see FIGS. 15, 16).

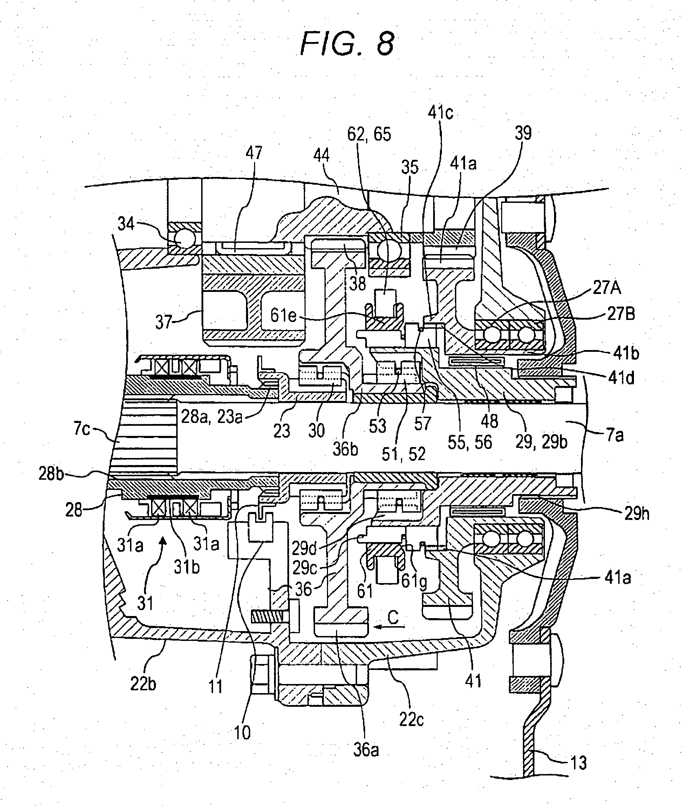

Gear position switch mechanism 60 includes clutch switch body 61 which switches a state of engaging members 56 of high-speed position clutch 55 illustrated in FIGS. 5, 8 and other figures. Gear position switch mechanism 60 further includes switch body shift unit 62 constituted by a fork. Switch body shaft unit 62 includes semi-circular-arc-shaped fork member 65 and others, and is shiftable to low-speed position switch position L (see FIG. 15) and high-speed position switch position H (see FIG. 16) along switch shaft 63 supported in parallel with crank shaft 7a within drive unit 20 as illustrated in FIGS. 3, 5, 8, 15, 16 and other figures.

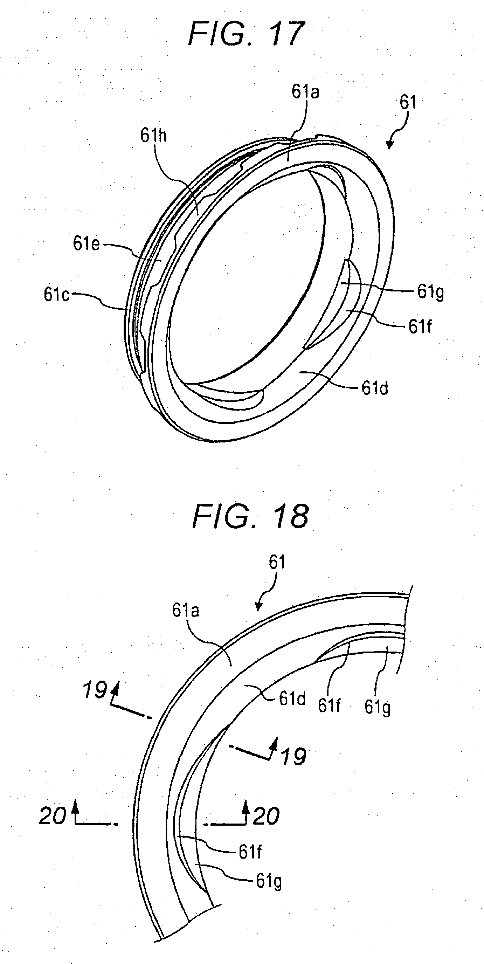

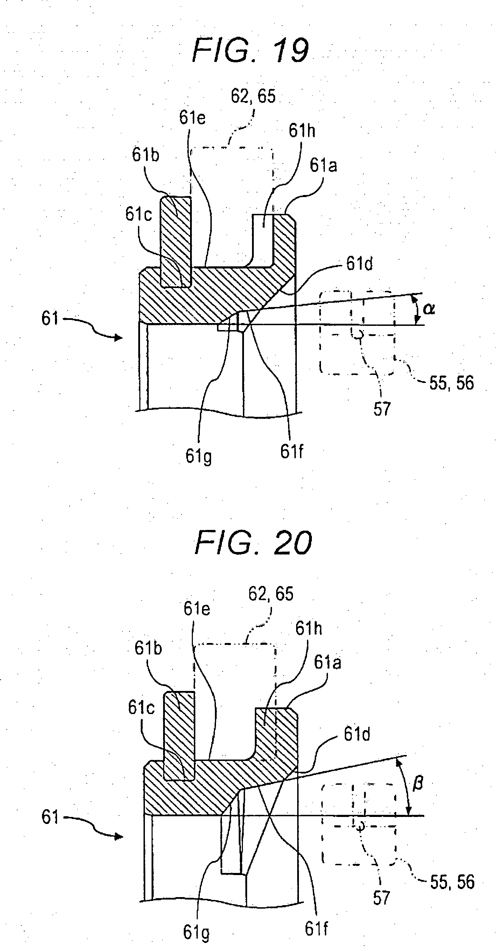

As illustrated in FIGS. 17 through 20 and other figures, clutch switch body 61 is an annular component fitted to the outer side of resultant force transmitter 29, such that clutch switch body 61 is rotatable around the shaft center of crank shaft 7a in a state of sliding contact with outer circumferential surface 29i of middle-diameter cylindrical portion 29a of resultant force transmitter 29 (see FIG. 10), and also shiftable (slidable) in the shaft center direction of crank shaft 7a. Flange portion 61a that extends in a flange shape on the outer circumferential side is formed integrally with a right side of clutch switch body 61. Attachment groove 61c to which C-shaped attachment ring 61b is attached is formed in a left part of the outer circumference of clutch switch body 61. Attachment ring 61b (see FIGS. 19, 20) is attached in a state that fork member 65 of switch body shift unit 62 is assembled on the outer circumference of clutch switch body 61 (more specifically, recessed cross section portion 61e on the left side of flange portion 61a of clutch switch body 61). Recess and protrusion portion 61h formed on a right side of fork member 65 of switch body shift unit 62, and recess and protrusion portion 61h formed on a left side of flange portion 61a of clutch switch body 61 facing fork member 65 are configured to engage with each other. This engagement prevents rotation of clutch switch body 61 in the circumferential direction.

Clutch switch body 61 includes force applying mechanisms which applies force from clutch switch body 61 to high-speed position clutch 55 to switch the state of engaging members 56 of high-speed position clutch 55 from a connection state to a disconnection state when clutch switch body 61 contacts high-speed position clutch 55. As one of the force applying mechanisms, chamfered portion 61d (see FIGS. 17 through 20 and other figures) is formed on a right inner circumference of clutch switch body 61. Chamfered portion 61d has an inclined shape which expands toward the radially outside with nearness to an end face of clutch switch body 61. When clutch switch body 61 shifts toward the right in the shaft center direction of crank shaft 7a, chamfered portion 61d comes into contact with left sides of engaging members 56 of high-speed position clutch 55, and applies a load to engaging members 56 such that engaging members 56 are inclined.

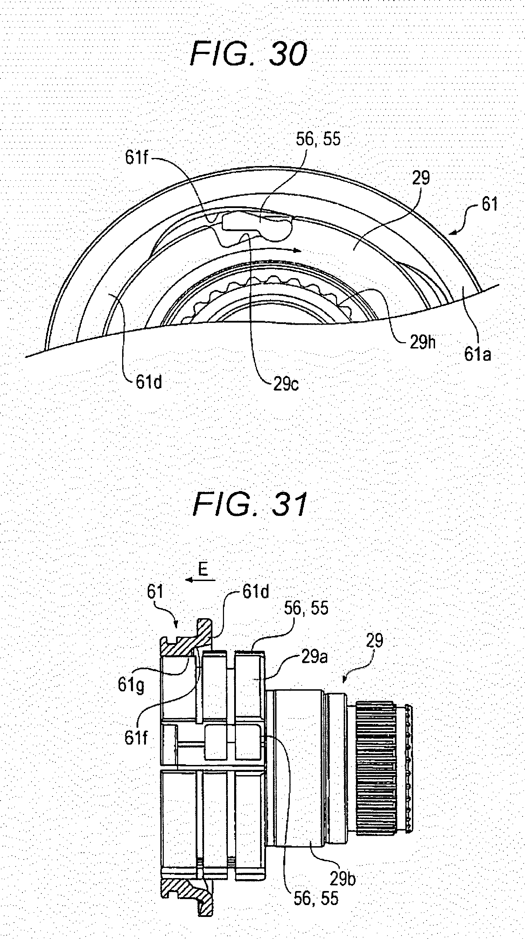

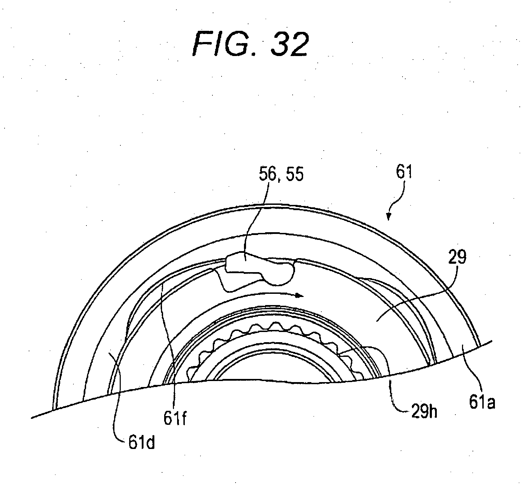

In addition, as a different one of the force applying mechanisms, a plurality of (four in this exemplary embodiment) cam faces 61f are provided at intervals of a circumferential predetermined angle (90 degrees in this exemplary embodiment) in a side view, such that a part of chamfered portion 61d of clutch switch body 61 has a shape of an outer circumferential side elliptical and circular-arc-shaped recess. During traveling of electric-assist bicycle 1 with revolutions of engaging members 56 of high-speed position clutch 55 together with resultant force transmitter 29 around a shaft center identical to the shaft center of crank shaft 7a, cam faces 61f of clutch switch body 61 apply a load to engaging members 56 such that engaging members 56 fitted to cam faces 61f are gradually pressed by cam faces 61f to come into the lying state. In this case, as illustrated in FIGS. 19, 20, each of cam faces 61f of clutch switch body 61 has an inclined shape which slightly expands with nearness to a position of entrance and retreat of engaging members 56 in the shaft center direction of crank shaft 7a (inclination angle α in cross section of FIG. 19 taken along line 19-19 in FIG. 18, and inclination angle β in cross section of FIG. 20 taken along line 20-20 in FIG. 18). According to this configuration, engaging members 56 shift to the right along the inclination of cam faces 61f to separate from cam faces 61f when engaging members 56 engage with tooth portion 41d of high-speed position transmission gear 41 by force of a predetermined value or larger (see FIGS. 31, 32). Moreover, as illustrated in FIGS. 19, 20, the inclination angle of cam faces 61f in a cross section taken in the radial direction gradually decreases in accordance with an advance of engaging members 56 by revolutions in the circumferential direction (i.e., inclination angle β > inclination angle α). It is preferable that each of inclination angles α and β of cam faces 61f with respect to the direction of the crank shaft center is 25 degrees or smaller.

Furthermore, chamfered portions 61g are formed on clutch switch body 61 on an inner side of the positions of cam faces 61f in the shaft center direction of crank shaft 7a (left side) to bring engaging members 56 into the lying state when engaging members 56 are fitted to cam faces 61f of clutch switch body 61 by a shift of clutch switch body 61 toward the right during a stop of electric-assist bicycle 1.

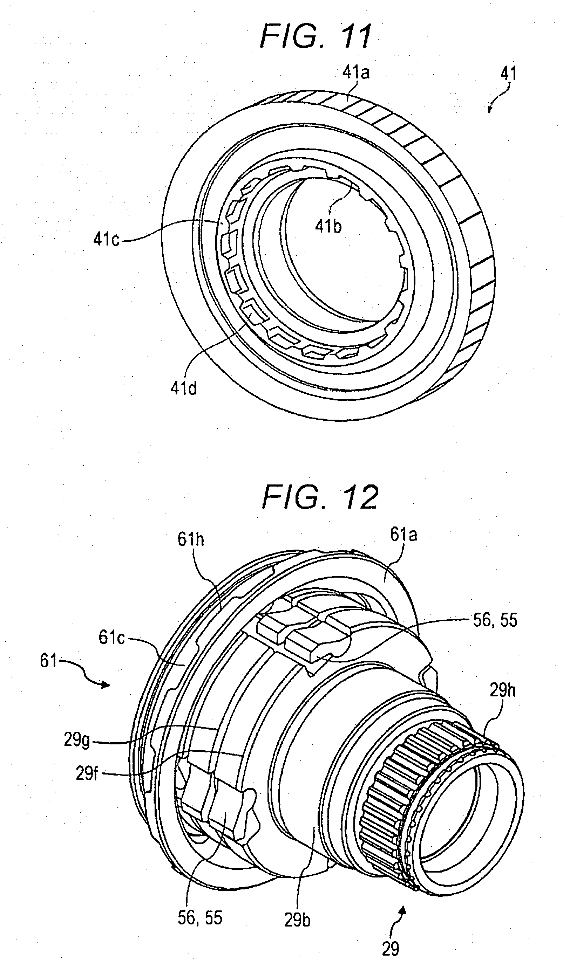

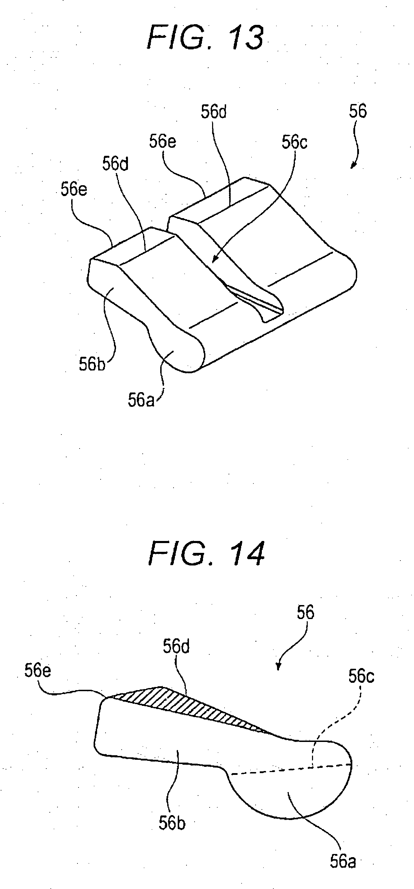

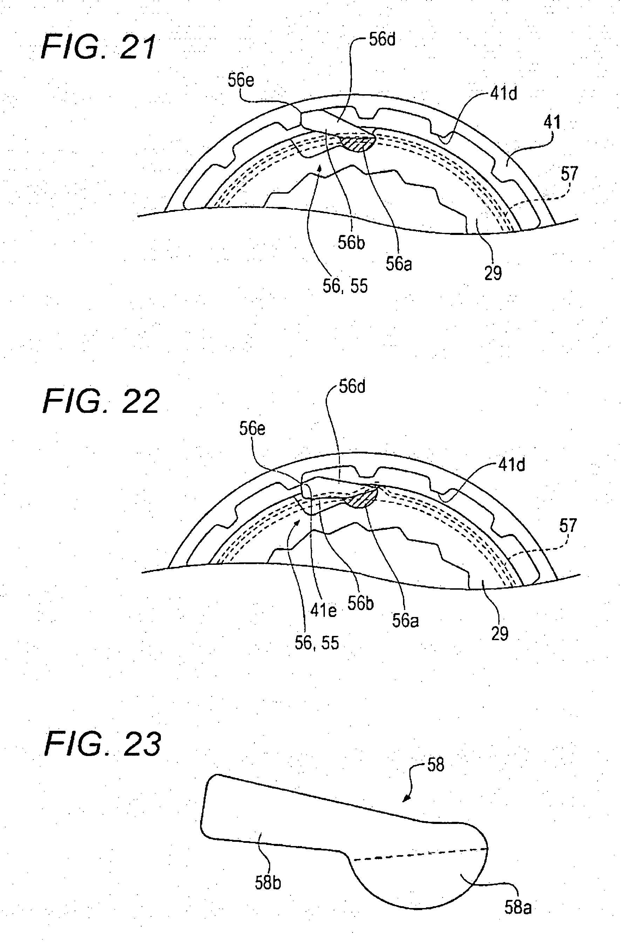

According to this exemplary embodiment, a part of a rear face of pawl 56b of each of engaging members 56 of high-speed position clutch 55 is raised in a mountain shape to form thick portion 56d (indicated as shaded area in FIG. 14 for easy understanding) as illustrated in FIGS. 13, 14. Each of engaging members 56 of high-speed position clutch 55 includes: moving base 56a having a substantially semi-circular shape in a side view and coming into sliding contact with storage recess 29c formed in middle-diameter cylindrical portion 29a of resultant force transmitter 29 to support engaging member 56 such that engaging member 56 is movable; pawl 56b extending in a radial direction (transverse direction in FIGS. 13, 14) from moving base 56a; and groove 56c cut in a central portion of pawl 56b in a width direction to receive urging spring 57. While conventional and ordinary engaging member (ratchet pawls) 58 includes pawl 58b which has a simple rectangular shape in a side view as illustrated in FIG. 23, engaging member 56 of high-speed position clutch 55 according to the present exemplary embodiment includes thick portion 56d produced by raising a part of the rear face of pawl 56b in a substantially mountain shape as a portion formed integrally with pawl 56b. As illustrated in FIGS. 11, 22 and other figures, tooth portion 41d of high-speed position transmission gear 41 engaging with engaging members 56 of high-speed position clutch 55 does not have a sawtooth shape, but has a substantially gear tooth shape in a side view.

According to the configuration including thick portions 56d, in a state of engagement between engaging members 56 of high-speed position clutch 55 and tooth portion 41d of high-speed position transmission gear 41, a cross-sectional area of this engaging portion receiving a shearing load increases in comparison with conventional engaging members 58 not including thick portions 56d (see FIG. 21) as will be described below. Moreover, even in a state of half-engagement between corner 56e at a tip of pawl 56b of each of engaging members 56 of high-speed position clutch 55 and corner 41e of tooth portion 41d of high-speed position transmission gear 41 as illustrated in FIG. 22, thick portion 56d prevents damage to corner 56e at the tip of pawl 56b of engaging member 56 of high-speed position clutch 55, such as breakage of corner 56e.

Furthermore, thick portion 56d of each of engaging members 56 of high-speed position clutch 55 comes into contact with a relatively wide portion of each of cam faces 61f of clutch switch body 61 to bring engaging member 56 into a stable lying state when engaging members 56 contact cam faces 61f of clutch switch body 61 for switching from the high-speed position to the low-speed position.

As illustrated in FIGS. 5, 8, 15, 16, and other figures, switch body shift unit 62 of gear position switch mechanism 60 is a component provided for shifting clutch switch body 61, and includes switch shaft 63, fork member 65, linkage cylinder 66, stop wheel 67, and others. Switch shaft 63 is supported by a pair of support portions 68A, 68B provided inside unit case 22 (left case 22b and right case 22c), and disposed in parallel with crank shaft 7a and shiftable in shaft center direction A (see FIGS. 15, 16). Switch cover 22d illustrated in FIGS. 3, 15, 16 is a cover for covering an end of switch shaft 63 and others.

Fork member 65 includes cylindrical portion 65a, and fork portion 65b having a C shape and continuing from cylindrical portion 65a. As described above, fork portion 65b is fitted to an outer circumference of recessed cross section portion 61e of clutch switch body 61 as illustrated in FIGS. 19, 20 and other figures. As illustrated in FIGS. 15, 16, stop wheel 67 is fitted to an outer side of switch shaft 63, and disposed between cylindrical portion 65a of fork member 65 and linkage cylinder 66. Switch shaft 63 is inserted into cylindrical portion 65a of fork member 65 and linkage cylinder 66 such that fork member 65 and linkage cylinder 66 are shiftable in shaft center direction A together with switch shaft 63. Switch body shift unit 62 is urged by coil-shaped spring 69 in such a direction as to shift from high-speed position switch position H toward low-speed position switch position L. Switch body shift unit 62 is configured to link fork member 65 with linkage cylinder 66 by using spring 83 which has smaller urging force than urging force of spring 69. Spring 83 used herein has extremely small urging force.

According to the present exemplary embodiment described above, electric transmission mechanism 70 is provided as one example of a switch body shift mechanism for shifting switch body shift unit 62 (including linkage cylinder 66) to low-speed position switch position L or high-speed position switch position H as illustrated in FIGS. 15, 16, 2, 3, and other figures. Electric transmission mechanism 70 includes case unit 71 dividable into two parts, small-sized switch motor 72 mounted on substrate 82, and connector unit 73 connected to switch motor 72 and the like. Electric transmission mechanism 70 further includes small-diameter motor speed reduction gear 74 attached to a shaft of switch motor 72, large-diameter first speed reduction gear 75 engaging with motor speed reduction gear 74, cylindrical worm 76 rotatable with first speed reduction gear 75 as a one-piece body, and large-diameter worm wheel 77 engaging with cylindrical worm 76. Electric transmission mechanism 70 further includes: small-diameter second speed-reduction gear 78 rotatable with worm wheel 77 as a one-piece body; driving body 79 engaging with second speed reduction gear 78 via circular-arc-shaped tooth portion 79a of driving body 79, and is provided with arm portion 79b engaging with linkage cylinder 66; and other components. Driving body 79 is rotatable around support shaft 79c. Arm portion 79b is inserted into recess portion 66a formed in linkage cylinder 66. During driving of switch motor 72, arm portion 79b of driving body 79 is driven with speed reduction by speed reduction gears 74, 75, 78, cylindrical worm 76, and worm wheel 77. In this state, driving of switch body shift unit 62 and fork member 65 is allowed via linkage cylinder 66.

Sectorial magnet 80 is affixed to driving body 79. Position detection sensor 81 constituted by a linear hall integrated circuit (IC) is further attached to substrate 82 to detect a position of driving body 79 close to magnet 80 when driving body 79 comes to a predetermined gear position (low speed position). Position detection sensor 81 is capable of detecting positions of driving body 79 (low-speed position, high-speed position, and intermediate position between low-speed and high-speed positions in this exemplary embodiment) in a linear state, i.e., detecting positions of driving body 79 from linear or curved multiple speeds (stepless speeds).

Switch motor 72 and position detection sensor 81 of electric transmission mechanism 70 are connected to controller 24 via wiring connected to connector unit 73. Switch motor 72 is driven to shift driving body 79 in accordance with operation input from the person riding the bicycle to gear position remote operation unit 18 attached to handlebar 5. According to this exemplary embodiment, an operation is performed in a following manner when position detection sensor 81 detects that switch body shift unit 62 (fork member 65, switch shaft 63, linkage cylinder 66 and others) functioning as a linkage part linked with clutch switch body 61 shifts from high-speed position switch position H toward low-speed position switch position L, such as a case when switch body shift unit 62 shifts from high-speed position switch position H to an intermediate position. More specifically, auxiliary driving force of motor 21 is temporarily reduced under control by controller 24 to achieve preferable switching from the high-speed position to the low-speed position.

When the person riding the bicycle selects the low position (first speed position) by operating gear position remote operation unit 18 in the state of the high-speed position in the configuration described above, driving body 79 is shifted to a position indicated in FIG. 15 by driving of switch motor 72. Thereafter, switch body shift unit 62 (e.g., fork member 65 of switch body shift unit 62) is shifted to low-speed position switch position L by urging force of spring 69.

Accordingly, clutch switch body 61 shifts in B direction in linkage with fork member 65, and contacts engaging members 56 of high-speed position clutch 55 as illustrated in FIG. 5. As a result, the state of engaging members 56 is switched to the lying state to disconnect resultant force transmitter 29 from high-speed position transmission gear 41 as illustrated in FIG. 6.

When pedals 8 are worked in this state, crank shaft 7a rotates as illustrated in FIGS. 4, 5, and human force transmitter 28 and linkage cylindrical body 23 also rotate. Linkage cylindrical body 23 in this state is connected to low-speed position transmission gear 36 via low-speed position clutch 51 in the rotation direction. Accordingly, the rotation of linkage cylindrical body 23 is transmitted to low-speed position transmission gear 36.

In addition, motor rotation shaft 21a rotates by driving of motor 21, whereby first speed reduction gear 37 and intermediate shaft 44 of speed reduction mechanism 25 rotate. Second speed reduction gear 38 and third speed reduction gear 39 rotate accordingly. Rotation of second transmission gear 38 is transmitted to low-speed position transmission gear 36, while rotation of third speed reduction gear 39 is transmitted to high-speed position transmission gear 41.

Accordingly, low-spoed position transmission gear 36 and high-speed position transmission gear 41 rotates. At this time, low-speed position transmission gear 36 is connected to resultant force transmitter 29 via low-speed position clutch 51 in the rotation direction as illustrated in FIGS. 4 through 6. As a result, rotation of low-speed position transmission gear 36 is transmitted to resultant force transmitter 29 to rotate resultant force transmitter 29. This rotation of resultant force transmitter 29 rotates driving sprocket 13 and chain 15, thereby rotating rear wheel 4. At this time, resultant force as a combination of human driving force applied to crank shaft 7a and auxiliary driving force generated by motor 21 is transmitted from low-speed position transmission gear 36 to resultant force transmitter 29 to rotate resultant force transmitter 29.

The position of engaging members 56 of high-speed position clutch 55 at this time is switched to the lying position to disconnect resultant force transmitter 29 from high-speed position transmission gear 41. Accordingly, rotation of high-speed position transmission gear 41 is not transmitted to resultant force transmitter 29.

On the other hand, when the person riding the bicycle in the low-speed position state selects the high-speed position (second speed position) by operating gear position remote operation unit 18, driving body 79 is shifted to a position indicated in FIG. 16 by driving of switch motor 72. At this time, switch body shift unit 62 (e.g., fork member 65 of switch body shift unit 62) shifts to high-speed position switch position H while resisting urging force of spring 69.

As a result, clutch switch body 61 shifts in C direction in linkage with fork member 65, and separates from engaging members 65 of high-speed position clutch 55 as illustrated in FIG. 8. Accordingly, as illustrated in FIG. 8, the state of engaging members 56 is switched to the rising state by the urging force of urging spring 57 to connect resultant force transmitter 29 with high-speed position transmission gear 41.

When pedals 8 are worked in this state, crank shaft 7a rotates, and human force transmitter 28 and linkage cylindrical body 23 also rotate. Linkage cylindrical body 23 in this state is connected to low-speed position transmission gear 36 via low-speed position clutch 51 in the rotation direction. Accordingly, the rotation of linkage cylindrical body 23 is transmitted to low-speed position transmission gear 36.

In addition, motor rotation shaft 21a rotates by driving of motor 21, whereby first speed reduction gear 37 and intermediate shaft 44 of speed reduction mechanism 25 rotate. Second speed reduction gear 38 and third speed reduction gear 39 rotate accordingly. Rotation of second transmission gear 38 is transmitted to low-speed position transmission gear 36, while rotation of third speed reduction gear 39 is transmitted to high-speed position transmission gear 41.

Each of low-speed position transmission gear 36 and high-speed position transmission gear 41 thus starts to rotate. High-speed position transmission gear 41 in this state is connected to resultant force transmitter 29 via high-speed position clutch 55 in the rotation direction. Accordingly, rotation of high-speed position transmission gear 41 is transmitted to resultant force transmitter 29 to rotate resultant force transmitter 29. At this time, resultant driving force is transmitted from high-speed position transmission gear 41 to resultant force transmitter 29, and rotates resultant force transmitter 29.

While low-speed position transmission gear 36 and high-speed position transmission gear 41 respectively rotate at this time, a rotation speed of high-speed position transmission gear 41 is higher than a rotation speed of low-speed position transmission gear 36 because of the difference in gear ratio. Accordingly, the rotation speed of resultant force transmitter 29 also becomes higher than the rotation speed of low-speed position transmission gear 36. Engaging members 52 of low-speed position clutch 51 therefore do not engage with tooth portion 29d of resultant force transmitter 29. As a result, low-speed position transmission gear 36 is kept in an idling state as illustrated in FIG. 9.

Further, torque of resultant force transmitted from low-speed position transmission gear 36 to resultant force transmitter 29 at the time of switching to the low-speed position (see FIGS. 5, 6) is larger than torque of resultant force transmitted from high-speed position transmission gear 41 to resultant force transmitter 29 at the time of switching to the high-speed position (see FIGS. 8, 9).

Accordingly, when the low-speed position is selected by operating gear position remote operation unit 18 during traveling of electric-assist bicycle 1 on an upslope or the like, high-torque resultant force is transmitted to rear wheel 4. As a result, a load imposed on motor 21 and the person riding the bicycle decreases. On the other hand, when the high-speed position is selected by operating gear position remote operation unit 18 to increase a traveling speed during traveling on a flat road surface or the like, torque of resultant force transmitter 29 decreases. In this case, however, a rotation speed of resultant force transmitter 29 increases. Accordingly, a rotation speed of rear wheel 4 increases, and therefore a traveling speed of electric-assist bicycle 1 easily become higher.

When the high-speed position is switched to the low-speed position in the configuration described above, clutch switch body 61 is brought into contact with engaging members 56 of high-speed position clutch 55 to switch the state of engaging members 56 of high-speed position clutch 55 from the connection state to the disconnection state. When engaging members 56 of high-speed position clutch 55 are connected to (engage with) resultant force transmitter 29 by large force in this configuration, the state of engaging members 56 of high-speed position clutch 55 may be difficult to switch to the disconnection state disconnected from resultant force transmitter 29. When the state of engaging members 56 of high-speed position clutch 55 is compulsorily switched to the disconnection state disconnected from resultant force transmitter 29, contact portions of high-speed position clutch 55, resultant force transmitter 29, or clutch switch body 61 in contact with engaging members 56 may be damaged, and reliability may deteriorate.

According to the present exemplary embodiment, however, the force applying mechanisms capable of applying force from clutch switch body 61 to high-speed position clutch 55 are provided to switch the state of high-speed position clutch 55 from the connection state connected to resultant force transmitter 29 to the disconnection state disconnected from resultant force transmitter 29 when clutch switch body 61 contacts high-speed position clutch 55. Accordingly, force is applied to switch the state of high-speed position clutch 55 to the disconnection state in the state of contact between clutch switch body 61 and high-speed position clutch 55 at the time of switching from the high-speed position to the low-speed position. Therefore, a preferable speed change is achievable.

More specifically, as one of the force applying mechanisms, the plurality of cam faces 61f are provided on clutch switch body 61. Accordingly, during traveling of electric-assist bicycle 1, engaging members 56 of high-speed position clutch 55 revolve in a predetermined direction around the shaft center identical to the shaft center of crank shaft 7a, while clutch switch body 61 does not rotate. Further, driving body 79 in this state is rotated by electric transmission mechanism 70 from the position indicated in FIG. 16 to the position indicated in FIG. 15. In this case, urging force of spring 69 is applied to clutch switch body 61 via linkage cylinder 66 and fork member 65.

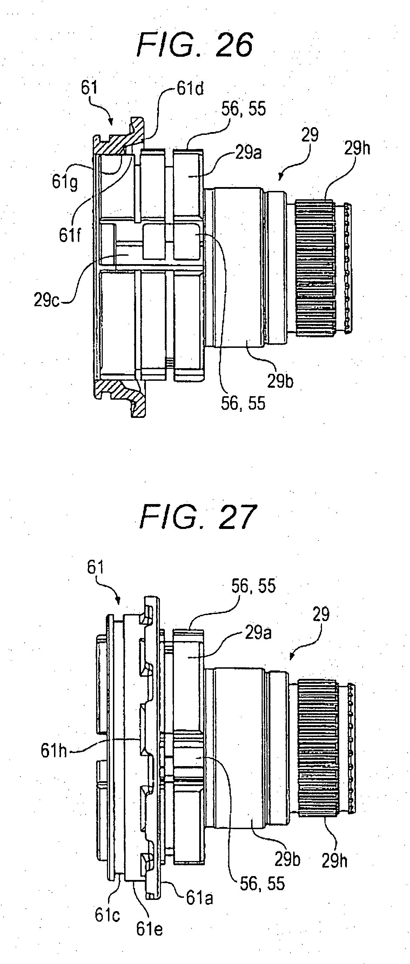

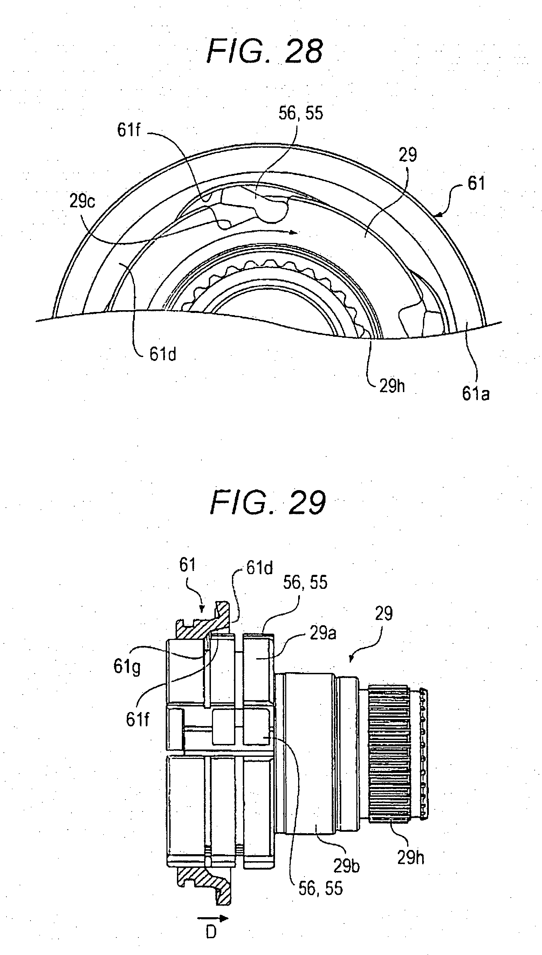

As described above, engaging members 56 of high-speed position clutch 55 are rotated, while clutch switch body 61 is shifted in D direction (toward the right in this exemplary embodiment) by urging force of spring 69 as illustrated in FIGS. 27, 28 from the state illustrated in FIG. 26. As a result, engaging members 56 of high-speed position clutch 55 are fitted to cam faces 61f of clutch switch body 61. Engaging members 56 of high-speed position clutch 55 are further rotated (revolved) to receive force in the lying direction along cam surfaces 61f, and come into the lying state as illustrated in FIGS. 29, 30. In the lying state of engaging members 56, high-speed position clutch 55 comes into the disconnection state. Accordingly, a preferable speed change operation for switching to the low-speed position is achievable.

As illustrated in FIGS. 19, 20, each of the plurality of cam faces 61f provided on clutch switch body 61 has an inclined shape which expands with nearness to the position of entrance and retreat of engaging members 56 in the shaft center direction of crank shaft 7a. Accordingly, when engaging members 56 of high-speed position clutch 55 are connected to resultant force transmitter 29 by considerably large force, the inclination of cam faces 61f of clutch switch body 61 allows clutch switch body 61 to shift in E direction while resisting urging force of spring 69, and maintain the connection state of high-speed position clutch 55 as illustrated in FIGS. 31, 32. In this case, the state of engaging members 56 of high-speed clutch 55 is not compulsorily switched to the disconnection position disconnected from resultant force transmitter 29, and the contact portions of high-speed position clutch 55, resultant force transmitter 29, or clutch switch body 61 in contact with engaging members 56 are not damaged, wherefore deterioration of reliability is avoidable. Thereafter, engaging members 56 of high-speed position clutch 55 are fitted to adjoining cam faces 61f in accordance with revolutions of engaging members 56, and come into the lying state to achieve a speed change to the low-speed position when the force applied to connect engaging members 56 of high-speed position clutch 55 and resultant force transmitter 29 decreases.

Clutch switch body 61 includes chamfered portion 61d (see FIGS. 16 through 20 and other figures) functioning as another force applying mechanism. Chamfered portion 61d is formed on the right inner circumference of clutch switch body 61, and has an inclined shape which expands toward the radially outside with nearness to the end face. When clutch switch body 61 shifts toward the right in the shaft center direction of crank shaft 7a, chamfered portion 61d comes into contact with left sides of engaging members 56 of high-speed position clutch 55, and applies a load to engaging members 56 such that engaging members 56 are inclined. Chamfered portions 61g are also formed on the inner side (left side) of the portions of cam faces 61f of clutch switch body 61 in the shaft center direction of crank shaft 7a.

According to this configuration, clutch switch body 61 shifts to the right in the shaft center direction of crank shaft 7a even in the stop state of electric-assist bicycle 1 in response to issue of a speed change instruction from the high-speed position to the low-speed position by operation of gear position remote operation unit 18. Accordingly, in the state of contact between clutch switch body 61 and engaging members 56 of clutch switch body 61, engaging members 56 come into the lying state by contacting chamfered portion 61d, or by contacting chamfered portions 61g next to cam faces 61f after engaging members 56 are fitted to cam faces 61f. A preferable speed change to the low-speed position is therefore similarly achievable.

According to the present exemplary embodiment, driving body 79 is shifted by switch motor 72 driven in accordance with operation input from the person riding the bicycle to gear position remote operation unit 18 attached to handlebar 5. In this case, auxiliary driving force of motor 21 is temporarily lowered under control by controller 24 when position detection sensor 81 detects that switch body shift unit 62 (e.g., fork member 65, switch shaft 63, and linkage cylinder 66) functioning as a linkage part linked with clutch switch body 61 shifts from high-speed position switch position H to low-speed position switch position L. As a result, engaging members 56 of high-speed position clutch 55 are separated and easily disconnected from tooth portion 41d of high-speed position transmission gear 41. Accordingly, convenience improves through simplification of speed change operation.

According to the present exemplary embodiment, thick portion 56d is formed to be raised in a mountain shape toward the outer circumferential side from the rear face of pawl 56b of each of engaging members 56 of high-speed position clutch 55, as illustrated in FIGS. 13, 14. Thus, in the state of engagement between engaging members 56 of high-speed position clutch 55 and tooth portion 41d of high-speed position transmission gear 41, each cross-sectional area of engaging portions receiving a shearing load increases in comparison with conventional engaging members 58 not including thick portions 56d, and damage to corner 56e at the tip of pawl 56b, such as breakage of corner 56e, is avoidable. As a result, reliability of high-speed position clutch 55, gear position switch mechanism 60 and other components improves.

Furthermore, thick portion 56d formed on each of engaging members 56 of high-speed position clutch 55 comes into contact with a relatively wide portion of each of cam faces 61f of clutch switch body 61 to bring engaging member 56 into a stable lying state when engaging members 56 contact cam faces 61f of clutch switch body 61 for switching from the high-speed position to the low-speed position. Thus, reliability of gear position switch mechanism 60 and other components also improves.

According to the present exemplary embodiment, electric transmission mechanism 70 is provided as a switch body shift mechanism for shifting clutch switch body 61 and switch body shift unit 62 for a change of the gear position. Accordingly, as an advantage, a possibility of failures of speed change operation of clutch switch body 61 and switch body shift unit 62, and a need of regular adjustment are both eliminated unlike a configuration which uses wires or the like for transmission of operation of gear position remote operation unit 18 and causes elongation of the wires after a long-time use.

According to the present exemplary embodiment, the position of driving body 79 which shifts clutch switch body 61 and switch body shift unit 62 is detectable from linear or curved multiple speeds (stepless speeds) including the low-speed position, the high-speed position, and the intermediate position between the low-speed and high-speed positions by position detection sensor 81 constituted by a magnet and a linear hall IC. In other words, as an advantage, the position of driving body 79 is detectable with high accuracy by using a small number of parts.

Alternatively, needless to say, a shift state produced by operation of gear position remote operation unit 18 may be transmitted to clutch switch body 61 and switch body shift unit 62 by wires or the like as a switch body shift mechanism for shifting clutch switch body 61 and switch body shift unit 62 for a gear position change, instead of using electric transmission mechanism 70.

According to the exemplary embodiment described above, four engaging members 56 of high-speed position clutch 55 are provided. However, one or a plurality of (other than four) engaging members 56 may be provided. It is preferable, however, that a plurality of engaging members 56 is provided. In addition, the same number of cam faces 61 of clutch switch body 61 as the number of engaging members 56 of high-speed position clutch 55 are provided in the above description. However, the number of cam faces 61f of clutch switch body 61 may be an integral multiple (two or larger integer) of the number of engaging members 56 of high-speed position clutch 55. According to this configuration, a chance that engaging members 56 of high-speed position clutch 55 are fitted to cam faces 61f of clutch switch body 61 increases at the time of contact between clutch switch body 61 and engaging members 56 of high-speed position clutch 55 in comparison with the configuration including the same number of cam faces 61f of clutch switch body 61 as the number of engaging members 56 of high-speed position clutch 55. Thus, engaging members 56 easily come into the lying state.

According to the exemplary embodiment described above, force from driving sprocket 13 is transmitted to rear sprocket 14 via chain 15 functioning as an endless driving force transmitter. Alternatively, a toothed belt may be provided as the endless driving force transmitter to transmit force from a driving gear corresponding to the driving sprocket to a rear gear via the toothed belt.

Further, according to the exemplary embodiment described above, drive unit 20 has a two-speed gear function. Alternatively, a speed reduction gear for first through third speed positions for switching between three positions, three unidirectional clutches for achieving speed changes, two selection clutches and the like may be provided as a speed reduction gear. In this case, only the first speed position unidirectional clutch functions in the first speed position, only the first speed position unidirectional clutch and the second speed position unidirectional clutch function in the second speed position, and all the unidirectional clutches function in the third speed position. According to this configuration, drive unit 20 can be given a three-speed transmission function. Even in this case, a speed change is achievable without causing a neutral state (idling state).

According to the exemplary embodiment described above, a unidirectional clutch is used as high-speed position clutch 55. Alternatively, a multiple disk clutch, a jaw clutch or the like may be used as high-speed position clutch 55 instead of the unidirectional clutch.

As described above, a drive unit according to the present invention is a drive unit included in an electric-assist bicycle capable of traveling with a combination of human driving force received from pedals as pedal force and auxiliary driving force generated by a motor. The drive unit includes: a crank shaft rotated by the human driving force; a resultant force transmitter rotatable by resultant force generated by a combination of the human driving force and the auxiliary driving forced a driving force output wheel body to which rotation of the resultant force transmitter is transmitted; and a transmission mechanism that has a plurality of selectable gear positions with different gear ratios, and transmits driving force to the resultant force transmitter. The crank shaft and a resultant force transmission shaft are coaxially provided. The transmission mechanism includes: a plurality of transmission gears including a low-speed position transmission gear and a high-speed position transmission gear; a high-speed position clutch capable of transmitting driving force of the high-speed position transmission gear to the resultant force transmitter; and a clutch switch body engageable to and disengageable from the high-speed position clutch and shifted in accordance with the selected gear position. Further, the drive unit is characterized by including a force applying mechanism that applies force from the clutch switch body to the high-speed position clutch to switch a state of the high-speed position clutch from a connection state connected to the resultant force transmitter to a disconnection state disconnected from the resultant force transmitter when the clutch switch body contacts the high-speed position clutch.

The transmission mechanism of the drive unit may include a low-speed position clutch capable of transmitting driving force of the low-speed position transmission gear to the resultant force transmitter. The high-speed position clutch may include an engaging member engageable with and disengageable from the high-speed position transmission gear and the clutch switch body.

According to this configuration, an optimal gear position is selected in accordance with a slope of a traveling road surface or the like during traveling of the electric-assist bicycle to reduce a load imposed on the motor and a person riding the bicycle. Accordingly, traveling suited for the traveling road surface is achievable. Moreover, there is provided the force applying mechanism that applies force from the clutch switch body to the high-speed position clutch to switch the state of the high-speed position clutch from the connection state connected to the resultant force transmitter to the disconnection state disconnected from the resultant force transmitter when the clutch switch body contacts the high-speed position clutch. In this case, force for bringing the high-speed position clutch into the disconnection state is given by the contact between the clutch switch body and the high-speed position clutch at the time of a speed change from the high-speed position to the low-speed position. Accordingly, preferable speed change operation is achievable. In this case, the engaging member may be brought into a lying state by engagement between the engaging member and the clutch switch body to separate from the high-speed position transmission gear and produce a disconnected state in which no driving force is transmitted from the high-speed position transmission gear to the resultant force transmitter. The engaging member may be so disposed as to rise or lie relative to the resultant force transmitter or a linkage rotation body linked with the resultant force transmitter.

A cam face formed on the clutch switch body and functioning as the force applying mechanism may be configured to apply a load to bring the engaging member into a lying state by revolving in a predetermined direction around a shaft center identical to a shaft center of the crank shaft in a state of sliding contact with the engaging member. In this case, the cam face of the clutch switch body may have an inclined shape which expands with nearness to a portion of entrance and retreat of the engaging member in a shaft center direction of the crank shaft. A number of the cam faces of the clutch switch body may be an integral multiple of a number of the engaging members of the high-speed position clutch (in integers equal to or larger than two).

According to this configuration, the cam face of the clutch switch body brings the engaging member into the lying state by using force of the engaging member during revolution of the engaging member by the human driving force and the auxiliary driving force at the time of a speed change from the high-speed position to the low-speed position. As a result, the high-speed position clutch comes into the disconnection state, whereby preferable speed change operation is achievable.

According to the present invention, a chamfered portion formed on the clutch switch body and functioning as the force applying mechanism may apply a load to bring the engaging member into a lying state by a shift of the clutch switch body in a shaft center direction of the crank shaft. In this case, a chamfered portion may be also formed on an inner side of the cam face of the clutch switch body in a shaft center direction of the crank shaft.

According to this configuration, the chamfered portion formed on the clutch switch body brings the engaging member into the lying state, and thereby brings the high-speed position clutch into the disconnection state to achieve preferable speed change operation in accordance with a shift of the clutch switch body in the shaft center direction of the crank shaft even in a stop state of the electric-assist bicycle at the time of a speed change from the high-speed position to the low-speed position. In this case, a thick portion raised toward an outer side in a mountain shape may be provided on a rear face of a pawl of the engaging member of the high-speed position clutch.

According to the present invention, the high-speed position clutch and the low-speed position clutch may be so disposed as to revolve around a shaft center identical to a shaft center of each of the crank shaft and the resultant force transmission shaft. According to the present invention, the crank shaft and the motor may be so disposed to as rotate around different shaft centers. The transmission mechanism according to the present invention may be configured to change a speed of resultant force generated by a combination of the human driving force and the auxiliary driving force.

According to the present invention, a human force transmitter to which the human driving force is transmitted may be provided on an outer circumference of the crank shaft. A magneto-striction generator of a torque sensor that detects the human driving force may be provided on the human force transmitter. The high-speed position clutch and the low-speed position clutch of the transmission mechanism may be disposed between the magneto-striction generator and the driving force output wheel body in a shaft center direction of the crank shaft.

Further, according to the present invention, an electric-assist bicycle that includes a drive unit may have a configuration including a rear wheel body on a rear wheel, and an endless driving force transmitter extended between the driving force output wheel body and the rear wheel body.

### INDUSTRIAL APPLICABILITY

The present invention is applicable to various types of electric-assist bicycles capable of traveling with a combination of human driving force received from pedals as pedal force and auxiliary driving force generated by a motor.

### REFERENCE MARKS IN THE DRAWINGS

1: electric-assist bicycle
2: frame
3: front wheel
4: rear wheel
7: crank
7a, 201: crank shaft
7c, 23a, 28a, 28b, 29h: serration portion (or spline portion)
8: pedal
12: battery (storage cell)
13: driving sprocket (driving force output wheel body)
14: rear sprocket (rear wheel body)
15, 208: chain (endless driving force transmitter)
17: transmission mechanism
18: gear position remote operation unit
20, 215: drive unit
21, 202: motor
22: unit case
23: linkage cylindrical body
24: controller
25: speed reduction mechanism
28: human force transmitter
29: resultant force transmitter
29a: middle-diameter cylindrical portion
29b: small-diameter cylindrical portion
29c: storage recess
29d: tooth portion
29f, 29g: storage groove
29i: outer circumferential surface
30, 47, 205: unidirectional clutch
31: torque sensor (human force detector)
36: low-speed position transmission gear
36a: tooth portion
37: first speed reduction gear
38: second speed reduction gear
39: third speed reduction gear
41: high-speed position transmission gear
41a, 41d: tooth portion
41b: small-diameter cylindrical portion
41c: middle-diameter cylindrical portion
41e: corner
44: intermediate shaft
51: low-speed position clutch
52, 56, 58: engaging member
55: high-speed position clutch
56a, 58a: moving base
56b, 58b: pawl
56c: groove
56d: thick portion
56e: corner
58c: corner
60: gear position switch mechanism
61: clutch switch body
61a: flange portion
61b: attachment ring
61c: attachment groove
61d: chamfered portion (force applying mechanism)
61e: recessed cross section portion
61f: cam face (force applying mechanism)
61g: chamfered portion (force applying mechanism)
61h: recess and protrusion portion
62: switch body shift unit
63: switch shaft
65: fork member
70: electric transmission mechanism
203: resultant force shaft
203a: tooth
204: human force transmission shaft
207: output sprocket
209: output shaft
209a: output gear
211: speed reducer

## Claims

1. A drive unit (20) provided in an electric-assist bicycle (1) capable of traveling with a combination of human driving force received from pedals (8) as pedal force and auxiliary driving force generated by a motor (21) the drive unit comprising:
a crank shaft (7a) rotated by the human driving force;
a resultant force transmitter (29) rotatable by resultant force generated by a combination of the human driving force and the auxiliary driving force;
a driving force output wheel body (13) to which rotation of the resultant force transmitter (29) is transmitted; and
a transmission mechanism (17) that has a plurality of selectable gear positions with different gear ratios, and transmits driving force to the resultant force transmitter (29), wherein
the crank shaft (7a) and a resultant, force transmission shaft (29) are coaxially provided,
the transmission mechanism (17) includes a plurality of transmission gears including a low-speed position transmission gear (36) and a high-speed position transmission gear (41), a high-speed position clutch (55) capable of transmitting driving force of the high-speed position transmission gear (41) to the resultant force transmitter (29), **characterised by** clutch switch body (61) engageable to and disengageable from the high-speed position clutch (55) and shifted in accordance with a selected gear position, and
a force applying mechanism (61d, 61f, 61g) is provided to apply force from the clutch switch body (61) to the high-speed position clutch (55) to switch a state of the high-speed position clutch (55) from a connection state connected to the resultant force transmitter (29) to a disconnection state disconnected from the resultant force transmitter (29) when the clutch switch body (61) contacts the high-speed position clutch (55).

2. The drive unit (20) according to claim 1, wherein the transmission mechanism (17) includes a low-speed position clutch (51) capable of transmitting driving force of the low-speed position transmission gear (36) to the resultant force transmitter (29).

3. The drive unit (20) according to claim 1, wherein
the high-speed position clutch (55) includes an engaging member (56) engageable with and disengageable from the high-speed position transmission gear (41) and the clutch switch body (61), and
the engaging member (56) is brought into a lying state by engagement between the engaging member (56) and the clutch switch body (61) to separate from the high-speed position transmission gear (41) and produce a disconnected state in which no driving force is transmitted from the high-speed position transmission gear (41) to the resultant force transmitter (29).

4. The drive unit (20) according to claim 1, wherein
the high-speed position clutch (55) includes an engaging member (56) engageable with and disengageable from the high-speed position transmission gear (41) and the clutch switch body (61), and
the engaging member (56) is so disposed as to rise and lie relative to the resultant force transmitter (29) or a linkage rotation body linked with the resultant force transmitter (29).

5. The drive unit (20) according to claim 1, wherein
the high-speed position clutch (55) includes an engaging member (56) engageable with and disengageable from the high-speed position transmission gear (41) and the clutch switch body (61), and
a cam face (61f) formed on the clutch switch body (61) and functioning as the force applying mechanism applies a load to the engaging member (56) to bring the engaging member (56) into a lying state by revolving in a predetermined direction around a shaft center identical to a shaft center of the crank shaft (7a) in a state of sliding contact with the engaging member (56).

6. The drive unit (20) according to claim 5, wherein the cam face (61f) of the clutch switch body (61) has an inclined shape which expands with nearness to a portion of entrance and retreat of the engaging member (56) in a shaft center direction of the crank shaft (7a).

7. The drive unit (20) according to claim 5, wherein a number of a plurality of the cam faces (61f) of the clutch switch body (61) is an integral multiple of a number of a plurality of the engaging members (56) of the high-speed position clutch (55) in integers equal to and larger than two.

8. The drive unit (20) according to claim 1, wherein
the high-speed position clutch (55) includes an engaging member (56) engageable with and disengageable from the high-speed position transmission gear (41) and the clutch switch body (61), and
a chamfered portion (61g) formed on the clutch switch body (61) and functioning as the force applying mechanism applies a load to the engaging member (56) to bring the engaging member (56) into a lying state by a shift of the clutch switch body (61) in a shaft center direction of the crank shaft (7a).

9. The drive unit (20) according to claim 5, wherein a chamfered portion (61g) is formed on an inner side of the cam face (61f) of the clutch switch body (61) in a shaft center direction of the crank shaf (7a), the chamfered portion (61g) having an inclined shape which expands with nearness to a portion of entrance and retreat of the engaging member (56) in the shaft center direction of the crank shaft (7a).

10. The drive unit (20) according to claim 1, wherein
the high-speed position clutch (55) includes an engaging member (56) engageable with and disengageable from the high-speed position transmission gear (41) and the clutch switch body (61), and
a thick portion (56d) raised toward an outer side in a mountain shape is provided on a rear face of a paw (56b) of the engaging member (56) of the high-speed position clutch (55).

11. The drive unit (20) according to claim 2, wherein the high-speed position clutch (55) and the low-speed position clutch (51) are so disposed as to revolve around a shaft center identical to a shaft center of each of the crank shaft and the resultant force transmission shaft (203).

12. The drive unit (20) according to claim 1, wherein the crank shaft (7a) and the motor (21) are so disposed as to rotate around different shaft centers.

13. The drive unit (20) according to claim 1, wherein the transmission mechanism (17) changes a speed of resultant force generated by a combination of the human driving force and the auxiliary driving force.

14. The drive unit (20) according to claim 2, wherein
a human force transmitter (28) to which the human driving force is transmitted is provided on an outer circumference of the crank shaft (7a),
a magneto-striction generator (31b) of a torque sensor (31) that detects the human driving force is provided on the human force transmitter (28), and
the high-speed position clutch (55) and the low-speed position clutch (51) of the transmission mechanism (17) are disposed between the magneto-striction generator (31b) and the driving force output wheel body (13) in a shaft center direction of the crank shaft (7a).

15. An electric-assist bicycle (1) that includes the drive unit (20) according to any one of claims 1 through 14, the electric-assist bicycle (1) comprising:
a rear wheel body (14) provided on a rear wheel (4); and
an endless driving force transmitter (15, 208) extended between the driving force output wheel body (13) and the rear wheel body (14).

## Patentansprüche

1. In einem zum Fahren mit einer Kombination aus von Pedalen (8) erhaltenen menschlichen Antriebskraft als Pedalkraft und von einem Motor (21) erzeugter Hilfsantriebskraft fähigen Fahrrad (1) mit elektrischer Unterstützung angeordnete Antriebseinheit (20), wobei die Antriebseinheit umfasst:
eine durch die menschliche Antriebskraft gedrehte Kurbelwelle (7a);
eine durch durch eine Kombination der menschlichen Antriebskraft und der Hilfsantriebskraft erzeugte resultierende Kraft drehbare Übertragung (29) für resultierende Kraft;
einen Antriebskraftabgabe-Radkörper (13), auf den Drehung der Übertragung (29) für resultierende Kraft übertragen wird; und
einen Übertragungsmechanismus (17), der eine Vielzahl von wählbaren Gangstellungen mit verschiedenen Gangübersetzungen aufweist und Antriebskraft auf die Übertragung (29) für resultierende Kraft überträgt, wobei
die Kurbelwelle (7a) und eine Übertragungswelle (29) für resultierende Kraft koaxial angeordnet sind,
der Übertragungsmechanismus (17) eine Vielzahl von Übertragungszahnrädern umfassend ein Niedriggeschwindigkeitspositions-Übertragungszahnrad (36) und ein Hochgeschwindigkeits-Übertragungszahnrad (41), eine zum Übertragen von Antriebskraft des Hochgeschwindigkeitspositions-Übertragungszahnrads (41) auf die Übertragung (29) für die resultierende Kraft fähige Hochgeschwindigkeitspositions-Kupplung (55), **gekennzeichnet durch** einen in die und von der Hochgeschwindigkeitspositions-Kupplung (55) ein- und ausrückbaren und entsprechend einer gewählten Gangstellung geschalteten Kupplungsschaltkörper (61) umfasst, und
ein Kraftausübungsmechanismus (61d, 61f, 61g) zum Ausüben von Kraft vom Kupplungsschaltkörper (61) auf die Hochgeschwindigkeitspositions-Kupplung (55) ausgebildet ist, um einen Zustand der Hochgeschwindigkeitspositions-Kupplung (55) von einem mit der Übertragung (29) für die resultierende Kraft verbundenen Verbindungszustand zu einem von der Übertragung (29) für die resultierende Kraft getrennten Trennungszustand zu schalten, wenn der Kupplungsschaltkörper (61) die Hochgeschwindigkeitspositions-Kupplung (55) berührt.

2. Antriebseinheit (20) nach Anspruch 1, wobei der Übertragungsmechanismus (17) eine zum Übertragen von Antriebskraft des Niedriggeschwindigkeitspositions-Übertragszahnrads (36) auf die Übertragung (29) für die resultierende Kraft fähige Niedriggeschwindigkeitspositions-Kupplung (51) umfasst.

3. Antriebseinheit (20) nach Anspruch 1, wobei
die Hochgeschwindigkeitspositions-Kupplung (55) ein mit dem Hochgeschwindigkeitspositions-Zahnrad (41) und dem Kupplungsschaltkörper (61) einrückbares und von diesen ausrückbares Eingriffselement (56) umfasst, und
das Eingriffselement (56) in einen liegenden Zustand durch Eingriff zwischen dem Eingriffselement (56) und dem Kupplungsschaltkörper (61) gebracht wird, um dieses vom Hochgeschwindigkeitspositions-Übertragungszahnrad (41) zu trennen und einen getrennten Zustand zu erzeugen, in dem keine Antriebskraft vom Hochgeschwindigkeitspositions-Übertragungszahnrad (41) auf die Übertragung (29) für resultierende Kraft übertragen wird.

4. Antriebseinheit (20) nach Anspruch 1, wobei
die Hochgeschwindigkeitspositions-Kupplung (55) ein mit dem Hochgeschwindigkeitspositions-Zahnrad (41) und dem Kupplungsschaltkörper (61) einrückbares und von diesen ausrückbares Eingriffselement (56) umfasst, und
das Eingriffselement (56) so angeordnet ist, dass es angehoben wird und in Bezug auf die Übertragung (29) für resultierende Kraft oder einen mit der Übertragung (29) für resultierende Kraft verbundenen Gelenkgetriebe-Drehungskörper liegt.

5. Antriebseinheit (20) nach Anspruch 1, wobei
die Hochgeschwindigkeitspositions-Kupplung (55) ein mit dem Hochgeschwindigkeitspositions-Zahnrad (41) und dem Kupplungsschaltkörper (61) einrückbares und von diesen ausrückbares Eingriffselement (56) umfasst, und
eine auf dem Kupplungsschaltkörper (61) gebildete und als der Kraftausübungsmechanismus dienende Kurvenflanke (61f) eine Last auf das Eingriffselement (56) ausübt, um das Eingriffselement (56) in einen liegenden Zustand durch Drehen in einer vorgegebenen Richtung um eine Wellenmitte identisch mit einer Wellenmitte der Kurbelwelle (7a) in einem Zustand von Gleitkontakt mit dem Eingriffselement (56) zu bringen.

6. Antriebseinheit (20) nach Anspruch 5, wobei die Kurvenflanke (61f) des Kupplungsschaltkörpers (61) eine schräge Form aufweist, die sich mit Nähe zu einem Eintritts- und Rückzugsabschnitt des Eingriffselements (56) in einer Wellenmittenrichtung der Kurbelwelle (7a) ausdehnt.

7. Antriebseinheit (20) nach Anspruch 5, wobei eine Zahl einer Vielzahl der Kurvenflanken (61f) des Kupplungsschaltkörpers (61) ein ganzzahliges Mehrfaches einer Zahl einer Vielzahl der Eingriffselemente (56) der Hochgeschwindigkeitspositions-Kupplung (55) in Ganzzahlen größer gleich 2 ist.

8. Antriebseinheit (20) nach Anspruch 1, wobei
die Hochgeschwindigkeitspositions-Kupplung (55) ein mit dem Hochgeschwindigkeitspositions-Zahnrad (41) und dem Kupplungsschaltkörper (61) einrückbares und von diesen ausrückbares Eingriffselement (56) umfasst, und
ein auf dem Kupplungsschaltkörper (61) gebildeter und als der Kraftausübungsmechanismus dienender abgeschrägter Abschnitt (61g) eine Last auf das Eingriffselement (56) ausübt, um das Eingriffselement (56) in einen liegenden Zustand durch ein Verschieben des Kupplungsschaltkörpers (61) in einer Wellenmittenrichtung der Kurbelwelle (7a) zu bringen.

9. Antriebseinheit (20) nach Anspruch 5, wobei ein abgeschrägter Abschnitt (61g) auf einer Innenseite der Kurvenflanke (61f) des Kupplungsschaltkörpers (61) in einer Wellenmittenrichtung der Kurbelwelle (7a) gebildet ist, wobei der abgeschrägte Abschnitt (61g) eine schräge Form aufweist, die sich mit Nähe zu einem Eintritts- und Rückzugsabschnitt des Eingriffselements (56) in der Wellenmittenrichtung der Kurbelwelle (7a) ausdehnt.

10. Antriebseinheit (20) nach Anspruch 1, wobei
die Hochgeschwindigkeitspositions-Kupplung (53) ein mit dem Hochgeschwindigkeitspositions-Zahnrad (41) und dem Kupplungsschaltkörper (61) einrückbares und von diesen ausrückbares Eingriffselement (56) umfasst, und
ein zu einer Außenseite hin in einer Bergform erhabener dicker Abschnitt (56d) an einer hinteren Fläche einer Klinke (56b) des Eingriffselements (56) der Hochgeschwindigkeitspositions-Kupplung (55) angeordnet ist.

11. Antriebseinheit (20) nach Anspruch 2, wobei die Hochgeschwindigkeitspositions-Kupplung (55) und die Niedriggeschwindigkeitspositions-Kupplung (51) so angeordnet sind, dass sie sich um eine Wellenmitte identisch mit einer Wellenmitte von sowohl der Kurbelwelle als auch der Übertragungswelle (203) für resultierende Kraft drehen.

12. Antriebseinheit (20) nach Anspruch 1, wobei die Kurbelwelle (7a) und der Motor (21) so angeordnet sind, dass sie sich um verschiedene Wellenmitten drehen.

13. Antriebseinheit (20) nach Anspruch 1, wobei der Übertragungsmechanismus (17) eine Geschwindigkeit der durch eine Kombination der menschlichen Antriebskraft und der Hilfsantriebskraft erzeugten resultierenden Kraft ändert.

14. Antriebseinheit (20) nach Anspruch 2, wobei
eine Übertragung (28) für menschliche Kraft, auf welche die menschliche Antriebskraft übertragen wird, an einem äußeren Umfang der Kurbelwelle (7a) angeordnet ist,
ein Magnetostriktionserzeuger (31b) eines Drehmomentsensors (31), der die menschliche Antriebskraft erfasst, an der Übertragung (28) für menschliche Kraft angeordnet ist, und
die Hochgeschwindigkeitspositions-Kupplung (55) und die Niedriggeschwindigkeitsposition-Kupplung (51) des Übertragungsmechanismus (17) zwischen dem Magnetostriktionserzeuger (31b) und dem Antriebskraftabgabe-Radkörper (13) in einer Wellenmittenrichtung der Kurbelwelle (7a) angeordnet sind.

15. Fahrrad (1) mit elektrischer Unterstützung, das die Antriebseinheit (20) nach einem der Ansprüche 1 bis 14 umfasst, wobei das Fahrrad (1) mit elektrischer Unterstützung umfasst:
einen an einem Hinterrad (4) angeordneten Hinterradkörper (14); und
eine sich zwischen dem Antriebskraftabgabe-Radkörper (13) und dem Hinterradkörper (14) erstreckende Endlos-Antriebskraftübertragung (15, 208).

## Revendications

1. Unité d'entraînement (20) prévue dans une bicyclette à assistance électrique (1) pouvant se déplacer en combinant une force d'entraînement humaine générée par une force exercée par des pédales (B) et une force d'entraînement auxiliaire générée par un moteur (21), l'unité d'entraînement comprenant:
un vilebrequin (7a) entraîné en rotation par la force d'entraînement humaine;
un émetteur de force résultante (29) pouvant tourner sous l'effet de la force résultante générée par une combinaison de la force d'entraînement humaine et de la force d'entraînement auxiliaire;
un corps de roue de sortie de force d'entraînement (13) auquel est transmise la rotation de l'émetteur de force résultante (29) ; et
un mécanisme de transmission (17) qui présente une pluralité de positions d'engrenage sélectionnables avec différents rapports de transmission, et transmet la force d'entraînement à l'émetteur de force résultante (29), dans lequel
le vilebrequin (7a) et un arbre de transmission de force résultante (29) sont prévus coaxialement,
le mécanisme de transmission (17) comprend une pluralité d'engrenages de transmission comprenant un engrenage de transmission de position lente (36) et un engrenage de transmission de position rapide (41), un embrayage de position rapide (55) capable de transmettre la force d'entraînement de l'engrenage de transmission de position rapide (41) à l'émetteur de force résultante (29), **caractérisé par** un corps de commutateur d'embrayage (61) pouvant être engagé et débrayé de l'embrayage de position rapide (55), et déplacé conformément à une position d'engrenage sélectionnée, et
un mécanisme d'application de force (61d, 61f, 61g) est prévu pour appliquer une force à partir du corps de commutateur d'embrayage (61) à l'embrayage de position rapide (55) pour passer d'un embrayage de position rapide (55) d'un mode de connexion à l'émetteur de force résultante (29) à un mode déconnecté du capteur de force résultante (29) lorsque le corps de commutateur d'embrayage (61) vient au contact de l'embrayage de position rapide (55).

2. Unité d'entraînement (20) selon la revendication 1, dans laquelle:
le mécanisme de transmission (17) comprend un embrayage de position lente (51) capable de transmettre la force d'entraînement de la transmission de position lente (26) à l'émetteur de force résultante (29).

3. Unité d'entraînement (20) selon la revendication 1, dans laquelle:
l'embrayage de position rapide (55) comprend un élément d'engagement (56) pouvant être engagé et désengagé de l'engrenage de transmission de position rapide (41) et du corps de commutateur d'embrayage (61) et
l'élément d'engagement (56) est amené dans un mode repos par engagement entre l'élément d'engagement (56) et le corps de commutateur d'embrayage (61) pour se séparer de l'engrenage de transmission de position rapide (41) et produire un mode déconnecté dans lequel aucune force d'entraînement n'est transmise de l'engrenage de transmission de position rapide(41) à l'émetteur de force résultante (29).

4. Unité d'entraînement (20) selon la revendication 1, dans laquelle:
l'embrayage de position rapide (55) comprend un élément d'engagement (56) pouvant être engagé et désengagé de l'engrenage de transmission de position rapide (41) et du corps de commutateur d'embrayage (61) et
l'élément d'engagement (56) est disposé de manière à s'élever et à se mettre au repos par rapport à l'émetteur de force résultante (20) ou à un corps de rotation de liaison relié à l'émetteur de force résultante (29).

5. Unité d'entraînement (20) selon la revendication 1, dans laquelle:
l'embrayage de position rapide (55) comprend un élément d'engagement (56) pouvant être engagé et désengagé de l'engrenage de transmission de position rapide (41) et du corps de commutateur d'embrayage (61), et
une face de came (61F) formée sur le corps de commutateur d'embrayage (61) et fonctionnant comme mécanisme d'application de force applique une charge à l'élément d'engagement (56) pour amener l'élément d'engagement (56) dans un mode repos en tournant dans une direction prédéterminée autour d'un centre d'arbre identique à un centre d'arbre de vilebrequin (7a) dans un mode de contact glissant avec l'élément d'engagement (56).

6. Unité d'entraînement (20) selon la revendication 5, dans laquelle:
la face de came (61F) du corps de commutateur d'embrayage (61) a une forme inclinée qui se dilate en s'approchant d'une partie de l'entrée et du retrait de l'élément d'engagement (56) dans une direction du centre de l'arbre de vilebrequin (7a).

7. Unité d'entraînement (20) selon la revendication 5, dans laquelle:
un nombre parmi une pluralité de faces de came (61F) du corps de commutateur d'embrayage (61) est un multiple intégral d'un nombre parmi une pluralité d'éléments d'engagement (56) de l'embrayage de position rapide (55) en nombres entiers égaux et supérieurs à deux.

8. Unité d'entraînement (20) selon la revendication 1, dans laquelle:
l'embrayage de position rapide (55) comprend un élément d'engagement (56) pouvant être engagé et désengagé de l'engrenage de transmission de position rapide (41) et du corps de commutateur d'embrayage (61) et
une partie chanfreinée (61g) formée sur le corps de commutateur d'embrayage (61) et fonctionnant comme mécanisme d'application de force applique une charge à l'élément d'engagement (56) pour amener l'élément d'engagement (56) dans un mode de repos par un déplacement du corps de commutateur d'embrayage (61) dans une direction centrale d'arbre du vilebrequin (7a).

9. Unité d'entraînement (20) selon la revendication 5, dans laquelle:
une partie chanfreinée (61g) est formée sur un côté intérieur de la face de came (61f) du corps de commutateur d'embrayage (41) dans une direction de centre d'arbre du vilebrequin (7a), la partie chanfreinée (61a) ayant une forme inclinée qui se dilate en s'approchant d'une partie d'entrée et de retrait de l'élément d'engagement (56) dans la direction du centre du vilebrequin (7a).

10. Unité d'entraînement (20) selon la revendication 1, dans laquelle:
l'embrayage de position rapide (55) comprend un élément d'engagement (56) pouvant être engagé et désengagé de l'engrenage de transmission de position rapide (41) et du corps de commutateur d'embrayage (61), et
une partie épaisse (56d) soulevée vers un côté extérieur et surélevé est prévue sur une face arrière d'une patte (56b) de l'élément d'engagement (56) de l'embrayage de position rapide (55).

11. Unité d'entraînement (20) selon la revendication 2, dans laquelle:
l'embrayage de position rapide (55) et l'embrayage de position lente (51) sont disposés de manière à tourner autour d'un centre d'arbre identique à un centre d'arbre de chacun du vilebrequin et de l'arbre de transmission de force résultante (20).

12. Unité d'entraînement (20) selon la revendication 1, dans laquelle:
le vilebrequin (7a) et le moteur (21) sont disposés de manière à tourner autour de différents centres d'arbre.

13. Unité d'entraînement (20) selon la revendication 1, dans laquelle:
le mécanisme de transmission (17) modifie une vitesse de la force résultante générée par une combinaison de la force d'entraînement humaine et de la force d'entraînement auxiliaire.

14. Unité d'entraînement (20) selon la revendication 2, dans laquelle:
un émetteur de force humaine (28) auquel la force d'entraînement humaine est transmise est prévu sur une circonférence extérieure du vilebrequin (7a),
un générateur de magnétostriction (31b) d'un capteur de couple (31) qui détecte la force d'entraînement humaine est prévu sur l'émetteur de force humaine (28), et
l'embrayage de position rapide (55) et l'embrayage de position lente (51) du mécanisme de transmission (17) sont disposés entre le générateur de magnétostriction (31b) et le corps de roue de sortie de force d'entraînement (13) dans une direction du centre de l'arbre de vilebrequin (7a).

15. Bicyclette à assistance électrique (1) qui comprend l'unité d'entraînement (20) selon l'une quelconque des revendications 1 à 14, la bicyclette à assistance électrique (1) comprenant:
un corps de roue arrière (14) prévu sur une roue arrière (4); et
un émetteur de force d'entraînement sans fin (15, 208) s'étendant entre le corps de roue de sortie de force d'entraînement (13) et le corps de roue arrière (14).
